(19) Europäisches Patentamt
European Patent Office
Office européen des brevets

(11) Veröffentlichungsnummer: **0 474 596 B1**

(12) **EUROPÄISCHE PATENTSCHRIFT**

(45) Veröffentlichungstag der Patentschrift: **15.11.95**

(51) Int. Cl.$^{6}$: **C09B 62/443**, D06P 1/38

(21) Anmeldenummer: **91810683.2**

(22) Anmeldetag: **27.08.91**

# (54) Reaktivfarbstoffe, Verfahren zu deren Herstellung und deren Verwendung.

(30) Priorität: **06.09.90 CH 2891/90**

(43) Veröffentlichungstag der Anmeldung:
**11.03.92 Patentblatt 92/11**

(45) Bekanntmachung des Hinweises auf die Patenterteilung:
**15.11.95 Patentblatt 95/46**

(84) Benannte Vertragsstaaten:
**BE CH DE ES FR GB IT LI**

(56) Entgegenhaltungen:
**EP-A- 0 179 019**
**EP-A- 0 309 406**
**DE-A- 3 935 583**

(73) Patentinhaber: **CIBA-GEIGY AG**
**Klybeckstrasse 141**
**CH-4002 Basel (CH)**

(72) Erfinder: **Tzikas, Athanassios, Dr.**
**Unt. Rütschetenweg 36**
**CH-4133 Pratteln (CH)**
Erfinder: **Aeschlimann, Peter**
**Sandweg 16**
**CH-4123 Allschwil (CH)**
Erfinder: **Lauk, Urs, Dr.**
**In der Ey 39**
**CH-8047 Zürich (CH)**
Erfinder: **Herzig, Paul**
**Ackerstrasse 52**
**CH-4057 Basel (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung; siehe z.B. EP-A-0 179 019, EP-A-0 309 406 und DE-A-39 35 583. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z.B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anforderungen genügen.

Gegenstand der Erfindung sind Reaktivfarbstoffe der Formel

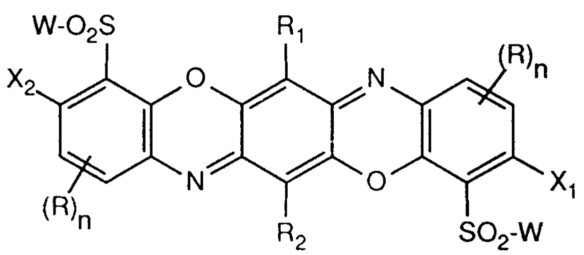

(1),

worin $R_1$ und $R_2$ Wasserstoff, Chlor, Brom, $C_1$-$C_4$-Alkyl, $C_1$-$C_4$-Alkoxy oder gegebenenfalls substituiertes Phenyl oder gegebenenfalls substituiertes Phenoxy bedeuten, $(R)_n$ für n Substituenten R steht, die unabhängig voneinander $C_1$-$C_4$-Alkyl, $C_1$-$C_4$-Alkoxy, Halogen, Sulfo, Carboxy, Carbamoyl, N-$C_1$-$C_4$-Alkylcarbamoyl, N,N-Di-$C_1$-$C_4$-alkylcarbamoyl, $C_1$-$C_4$-Alkylsulfonyl, Sulfamoyl, N-$C_1$-$C_4$-Alkylsulfamoyl oder N,N-Di-$C_1$-$C_4$-alkylsulfamoyl sein können, W Hydroxy oder $C_1$-$C_6$-Alkyl, das durch Hydroxy, Carboxy, Sulfo, Sulfato, Chlor, $C_1$-$C_4$-Alkoxy, Carbamoyl, Sulfamoyl oder einen Rest

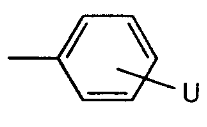 oder

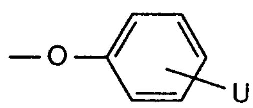

worin U Sulfo, Sulfato, Hydroxy oder Carboxy ist, substituiert sein kann, n = 0, 1 oder 2, $X_1$ ein Rest der Formel

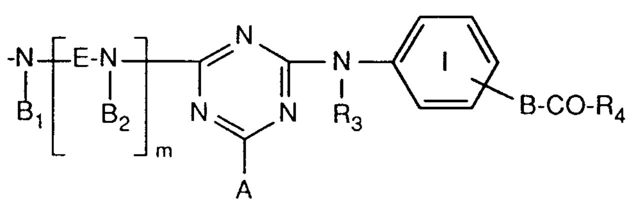

(2),

worin $B_1$ und $B_2$ unabhängig voneinander Wasserstoff oder gegebenenfalls substituiertes $C_1$-$C_4$-Alkyl, E $C_2$-$C_4$-Alkylen, das durch Halogen, Hydroxy, Carboxy, Sulfo, Phenyl, Sulfophenyl oder $C_1$-$C_4$-Alkoxycarbonyl substituiert sein kann, oder Cyclohexylen ist, das durch $C_1$-$C_4$-Alkyl substituiert sein kann, oder worin die Gruppe -N($B_1$)-E-N($B_2$)- 1,4-Piperazindiyl ist, m = 0 oder 1, A der Rest eines Amins, $R_3$ Wasserstoff oder gegebenenfalls substituiertes $C_1$-$C_4$-Alkyl, B die direkte Bindung oder einen Rest

$$-(CH_2)_{n'}- \quad \text{oder} \quad -O-(CH_2)_{n'}- \;;$$

n' = 1, 2, 3, 4, 5 oder 6; $R_4$ ein Rest der Formel

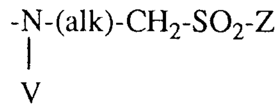

(2a)

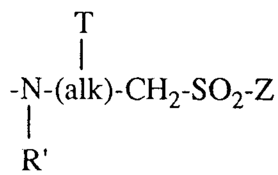

(2b)

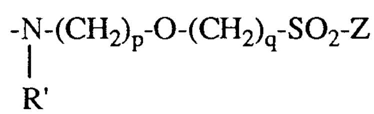

(2c)

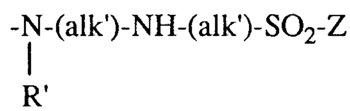

(2d)

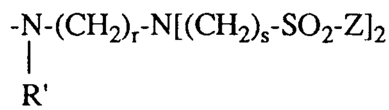

(2e) oder

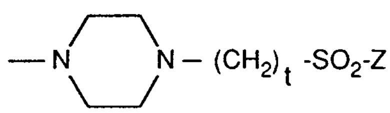

(2f),

worin R' Wasserstoff oder $C_1$-$C_6$-Alkyl ist, alk einen Alkylenrest mit 1 bis 7 Kohlenstoffatomen darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest -$SO_2$-Z bedeutet, V Wasserstoff, gegebenenfalls substituiertes $C_1$-$C_4$-Alkyl oder einen Rest der Formel

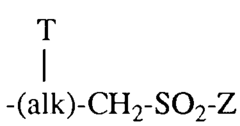

(2g),

worin (alk) die zuvor angegebene Bedeutung hat, alk' unabhängig voneinander Polymethylenreste mit 2 bis 6 C-Atomen, Z $\beta$-Sulfatoäthyl, $\beta$-Thiosulfatoäthyl, $\beta$-Phosphatoäthyl, $\beta$-Acyloxyäthyl, $\beta$-Halogenäthyl oder Vinyl, p, q, r und t unabhängig voneinander je die Zahl 1, 2, 3, 4, 5 oder 6 bedeuten, s die Zahl 2, 3, 4, 5 oder 6 und $X_2$ eine Gruppe $-NH_2$ ist;
oder worin $X_1$ ein Rest der Formel

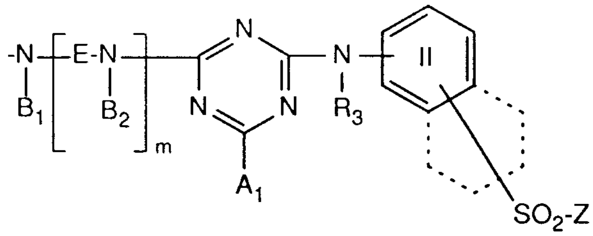

(3),

worin $A_1$ einen der Reste der Formeln (2a) bis (2f), oder einen Rest der Formel

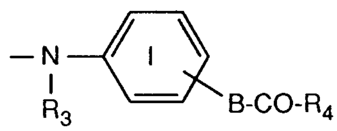

(4)

oder

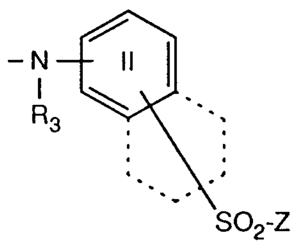

(5)

bedeutet, und $B_1$, $B_2$, E, m, $R_3$, $R_4$ und Z die angegebenen Bedeutungen haben, und der Benzolring I und der Benzol- oder Naphthalinring II weitere Substituenten enthalten können, und $X_2$ eine Gruppe $-NH_2$ ist,
oder worin $X_1$ ein Rest der Formel (2) und $X_2$ unabhängig von $X_1$ ebenfalls ein Rest der Formel (2) ist,
oder worin $X_1$ ein Rest der Formel

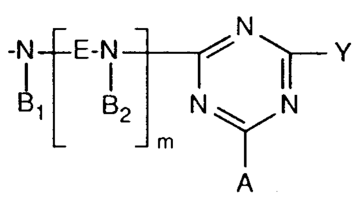

(3a),

worin Y einer der Reste der Formeln (2a) bis (2f) ist, $B_1$, $B_2$, E, A und m die angegebenen Bedeutungen haben, und $X_2$ eine Gruppe $-NH_2$ oder ebenfalls ein Rest der Formel (3a) ist, mit der Bedingung, dass der Rest A in den Formeln (2) und (3a) frei von faserreaktiven Gruppen ist.

Aus der DE-A 39 35 583 sind ähnliche Farbstoffe bekannt, die sich in charakteristischer Weise von den erfindungsgemässen Farbstoffen dadurch unterscheiden, dass der Rest A ein eine faserreaktive Gruppe enthaltendes Amin ist.

Als $C_1$-$C_4$-Alkyl kommt für $R_1$ und $R_2$ z.B. in Betracht:
Methyl, Aethyl, n-Propyl, Isopropyl, n-Butyl, sek.-Butyl, Isobutyl und tert.-Butyl.

Als $C_1$-$C_6$-Alkyl kommt für W z.B. in Betracht: Methyl, Aethyl, Propyl, Isopropyl, Butyl, n-Pentyl und n-Hexyl, wobei die Reste wie angegeben substituiert sein können.

Als $C_1$-$C_4$-Alkoxy kommt für $R_1$ und $R_2$ z.B. in Betracht: Methoxy, Aethoxy, n-Propoxy, Isopropoxy, n-Butoxy, sek.-Butoxy, Isobutoxy und tert.-Butoxy.

Bedeuten $R_1$ und $R_2$ einen Phenylrest oder einen Phenoxyrest, so kann dieser Rest weitersubstituiert sein z.B. durch Halogen, wie Fluor, Chlor oder Brom, $C_1$-$C_4$-Alkyl, wie Methyl, Aethyl, Propyl, Isopropyl oder Butyl, $C_1$-$C_4$-Alkoxy, wie Methoxy oder Aethoxy, Nitro, Carboxy und Sulfo.

Mögliche Substituenten R sind z.B. Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, Fluor, Chlor, Brom, Carboxy, Carbamoyl, N-Methylcarbamoyl, N-Aethylcarbamoyl, N,N-Dimethylcarbamoyl, N,N-Diäthylcarbamoyl, Methylsulfonyl, Aethylsulfonyl, Sulfamoyl, N-Methylsulfamoyl, N-Aethylsulfamoyl, N,N-Dimethylsulfamoyl und N,N-Diäthylsulfamoyl.

Als $C_1$-$C_4$-Alkyl kommt für $B_1$, $B_2$ und $R_3$ unabhängig voneinander ein geradkettiger oder verzweigter Alkylrest in Betracht, der auch substituiert sein kann, z.B. durch Halogen, Hydroxy, Cyan, Sulfo oder Sulfato. Als Beispiele seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl, Sulfomethyl, β-Sulfoäthyl und β-Sulfatoäthyl.

Das Brückenglied E kann geradkettig oder verzweigt sein, und, wie oben angegeben, weitersubstituiert sein. Als Beispiele für E seien genannt: Aethylen, 1,2- und 1,3-Propylen, 2-Hydroxy- 1,3-propylen, 1- und 2-Phenyl- 1,3-propylen, 2-(4'-Sulfophenyl)-1,3-propylen, 1,4-, 2,3- und 2,4-Butylen, 2-Methyl- 1,3-propylen, 1-Chloro-2,3-propylen, 2,3-Diphenyl-1,4-butylen, 1,3-Cyclohexylen, 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4,6-Dimethyl-1,3-cyclohexylen, 4-Methyl-1,2-cyclohexylen; oder der Rest -N($B_1$)-E-N($B_2$)- ist 1,4-Piperazindiyl.

Als Aminogruppe A kommt z.B. in Betracht: -$NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können. Die oben genannten Alkyl-, Cycloalkyl-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_1$-$C_4$-Alkyl, $C_1$-$C_4$-Alkoxy, Acylaminogruppen, wie Acetylamino, Ureido, Hydroxy, Carboxy, Sulfomethyl, Sulfo und Sulfato. Bevorzugt sind auch Amine $A_1$, die den Rest der Formel

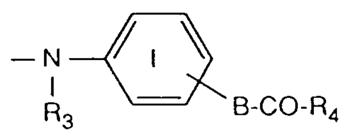

(4)

oder

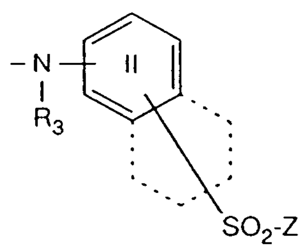

(5)

oder einen der Reste der Formeln (2a) bis (2f), worin $R_3$, B, $R_4$ und Z die unter den Formeln (2) und (3) angegebenen Bedeutungen haben, enthalten, und in denen der Benzolring I und der Benzol- oder Naphthalinring II weitere Substituenten enthalten können.

Als Beispiele für den Aminorest A seien genannt: $-NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, N-Methyl-N-phenylamino, N-Aethyl-N-phenylamino, N-Propyl-N-phenylamino, N-Butyl-N-phenylamino, N-β-Cyanäthyl-N-phenylamino, N-Aethyl-2-methylphenylamino, N-Aethyl-4-methylphenylamino, N-Aethyl-3-sulfophenylamino, N-Aethyl-4-sulfophenylamino, Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1-)-amino, 4,6,8-Trisulfonaphthyl-(1)-amino, 6-Sulfonaphthyl-(2)-amino, Pyridyl-(2)-amino, Morpholino, Piperidino, Piperazino, Anilin-2,5-disulfonsäure, Anilin-3,5-disulfonsäure, Anthranilsäure, m-Aminobenzoesäure, Sulfanilsäure, 2-Aminotoluol-4-sulfonsäure, 2-Aminotoluol-5-sulfonsäure, 4-Methylanilin-2,5-disulfonsäure, 4-Methoxyanilin-2,5-disulfonsäure, 2-Naphthylamin-1-sulfonsäure, 2-Naphthylamin-1,5-disulfonsäure, 2-Naphthylamin-4,8-disulfonsäure, 2-Naphthylamin-6,8-disulfonsäure, 1-Naphthylamin-2,4,8-trisulfonsäure, 1-Naphthylamin-2,5,7-trisulfonsäure, 1-Naphthylamin-3,6,8 trisulfonsäure, 1-Naphthylamin-4,6,8-trisulfonsäure, 2-Naphthylamin-1,5,7-trisulfonsäure und 2-Naphthylamin-3,6,8-trisulfonsäure.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy und Butylenoxy. Falls B einen Rest

$$-O-(CH_2)_{n'}-$$

darstellt, ist B durch das Sauerstoffatom an den Benzolring gebunden. Vorzugsweise ist B die direkte Bindung.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent T ist als Alkanoyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_3$ ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Aethylen, Propylen oder Butylen. Die Indizes p, q und t sind unabhängig voneinander und vorzugsweise 2, 3 oder 4. Die Indizes r und s sind unabhängig voneinander vorzugsweise 2.

Falls T ein Rest $-SO_2-Z$ und R' Wasserstoff ist, hat der Rest der Formel (2b) vorzugsweise die Formel

$$-NH-CH_2-\underset{\underset{SO_2-Z'}{|}}{CH}-(CH_2)_{2-6}-SO_2-Z \qquad (2g)$$

worin Z und Z' unabhängig voneinander β-Sulfoäthyl, β-Thiosulfatoäthyl, β-Phosphatoäthyl, β-Acyloxyäthyl, β-Halogenäthyl oder Vinyl ist. Eine wichtige Formelvariante dieses Restes ist:

$$-NH-CH_2-\underset{\underset{SO_2-Z'}{|}}{CH}-(CH_2)_3-SO_2-Z \qquad (2h)$$

worin Z = Z' ist, wobei Z bzw. Z' die oben angegebene Bedeutung hat; insbesondere ist Z bzw. Z' β-Sulfoäthyl, β-Chloräthyl oder Vinyl.

Der Benzolring 1 sowie der Benzol- oder Naphthalinring II können weitere Substituenten enthalten.

Als Beispiele für weitere Substituenten seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere Alkanoylaminogruppen, wie Acetylamino, Propionylamino oder Benzoylamino, Phenylamino, N,N-Di-$\beta$-hydroxyäthylamino, N,N-Di-$\beta$-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-($\beta$-Hydroxyäthyl)-sulfamoyl, N,N-Di($\beta$-hydroxyäthyl)-sulfamoyl, N-Phenylsulfamoyl, Ureido, Hydroxy, Carboxy, Sulfomethyl oder Sulfo. Bevorzugt sind als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Bevorzugt sind die Reaktivfarbstoffe der Formel (1), worin

a) $X_1$ ein Rest der Formel (2) oder (3) und $X_2$ -$NH_2$ ist ist; oder

b) $X_1$ und $X_2$ unabhängig voneinander je ein Rest der Formel (2) sind; oder

c) $X_1$ ein Rest der Formel (3a) und $X_2$ -$NH_2$ oder unabhängig von $X_1$ ebenfalls ein Rest der Formel (3a) ist.

Besonders bevorzugt sind die Reaktivfarbstoffe der Formel (1), worin $X_1$ ein Rest der Formel (2) oder (3),und $A_1$ ein Rest der Formel

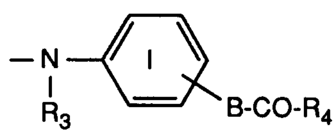

(4)

oder

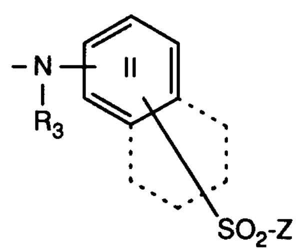

(5)

worin $R_3$, B, $R_4$ und Z die unter den Formeln (2) und (3) angegebenen Bedeutungen haben, wobei die Reste der Formeln (4) und (5) unabhängig von den analogen Resten in den Formeln (2) und (3) sind, und der Benzolring 1 und der Benzol- oder Naphthalinring II weitere Substituenten enthalten können, und $X_2$ die Gruppe -$NH_2$ ist ist.

Ebenfalls besonders bevorzugt sind die Reaktivfarbstoffe der Formel (1), worin $X_1$ und $X_2$ unabhängig voneinander je ein Rest der Formel (2) ist, und worin A ein Rest der Formel (4) ist, worin $R_3$, B und $R_4$ die unter Formel (2) angegebenen Bedeutungen haben und der Benzolring I weitere Substituenten enthalten kann, wobei der Rest der Formel (4) unabhängig von dem analogen Rest der Formel (2) ist.

Besonders bevorzugt sind ferner die Reaktivfarbstoffe der Formel (1), worin $X_1$ ein Rest der Formel (2), A -$NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist, und $X_2$ die Gruppe -$NH_2$ ist, oder worin $X_1$ und $X_2$ unabhängig voneinander je ein Rest der Formel (2) ist, und A $NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy,

Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

Besonders bevorzugt sind ebenfalls die Reaktivfarbstoffe der Formel (1), worin $X_1$ ein Rest der Formel (3a) ist, $B_1$, $B_2$, E und Y die unter Formel (3a) angegebenen Bedeutungen haben und A -$NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Naphthylamino, wobei der Naphthalinkern wie für den Phenylring angegeben, substituiert sein kann, oder Morpholino ist, und $X_2$ die Gruppe -$NH_2$ ist, oder worin $X_1$ und $X_2$ unabhängig voneinander je ein Rest der Formel (2) ist, und A -$NH_2$, $C_1$-$C_4$-Alkylamino, das durch $C_1$-$C_4$-Alkxoy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Naphthylamino, wobei der Naphthalinkern, wie für den Phenylring angegeben, substituiert sein kann, oder Morphotino ist.

Ganz besonders bevorzugt sind die Reaktivfarbstoffe der Formel

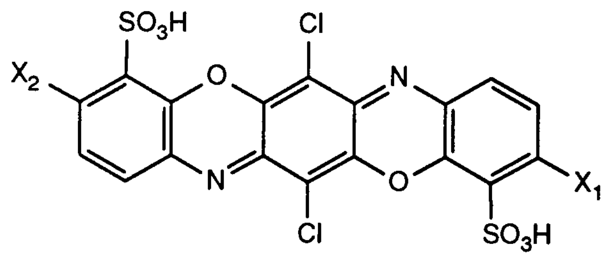

(6),

worin $X_1$ und $X_2$ die unter Formel (1) angegebenen Bedeutungen, insbesondere worin $X_1$ und $X_2$ die als bevorzugt und als besonders bevorzugt angegebenen Bedeutungen haben.

Ganz besonders bevorzugt sind die Reaktivfarbstoffe der Formel

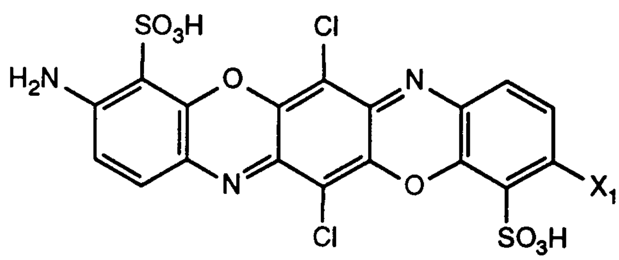

(6a),

worin $X_1$ ein Rest der Formel

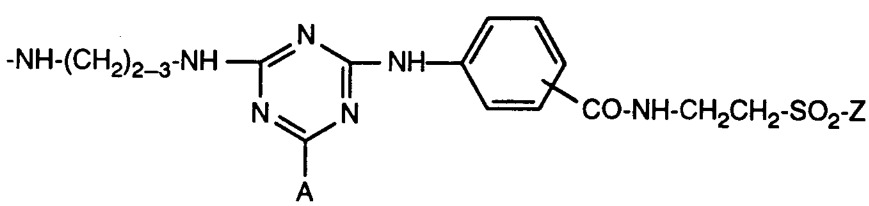

(7),

A $-NH_2$, $C_1$-$C_4$-Alkylamino, das durch $C_1$-$C_4$-Alkoxy, Hydroxy, Sulfato oder Sulfo substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

Ganz besonders bevorzugt sind ferner die Reaktivfarbstoffe der Formel

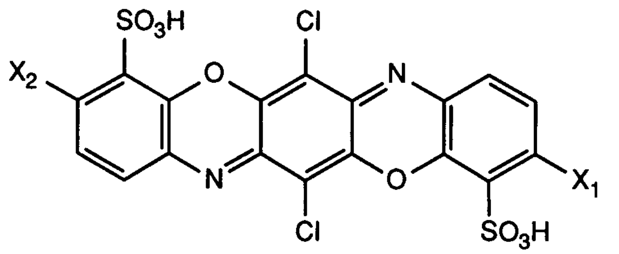

(9),

worin $X_1$ und $X_2$ je ein Rest der Formel

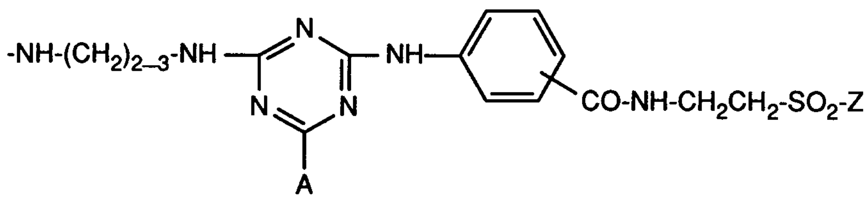

(7),

A $-NH_2$, $C_1$-$C_4$-Alkylamino, das durch $C_1$-$C_4$-Alkoxy, Hydroxy, Sulfato oder Sulfo substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

Ganz besonders bevorzugt sind ausserdem Reaktivfarbstoffe der Formeln (6) oder (9), worin $X_1$ bzw. $X_1$ und $X_2$ je ein Rest der Formel

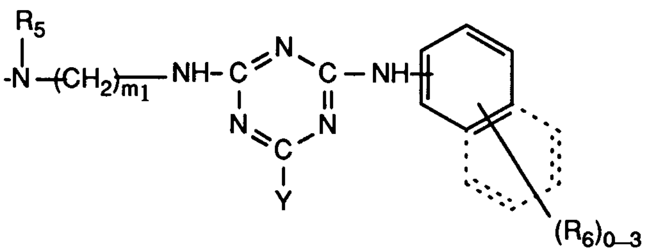

(3aa)

worin $m_1$ = 2, 3, 4, 5 oder 6 und $R_5$ Wasserstoff, Methyl, Aethyl oder Hydroxyäthyl ist, $R_6$ Methyl, Aethyl, Methoxy, Aethoxy, Chlor, Carboxy oder Sulfo ist und Y ein Rest

$-NH-(CH_2)_{m_2}-SO_2-Z$

$-NH-(CH_2)_2-O-(CH_2)_2-SO_2-Z$ oder

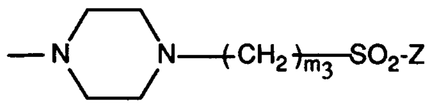

worin $m_2$ und $m_3$ = 2, 3, 4, 5 oder 6, insbesondere 2 oder 3 ist und Z Vinyl, $\beta$-Chloräthyl oder $\beta$-Sulfatoäthyl ist.

Vorzugsweise ist $X_1$ bzw. $X_1$ und $X_2$ je ein Rest der Formel

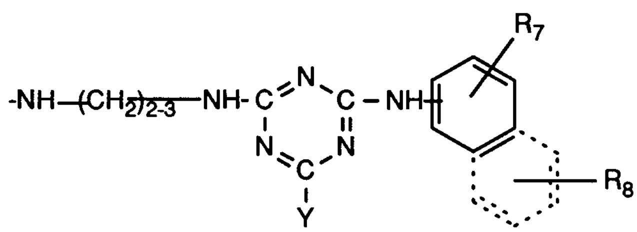

(3ab)

worin $R_7$ und $R_8$ Sulfo bedeuten oder $R_7$ Wasserstoff und $R_8$ Sulfo ist, oder $R_7$ Sulfo und $R_8$ Wasserstoff ist, und Y ein Rest

$-NH-(CH_2)_{2-3}-SO_2-Z$

$-NH-(CH_2)_{2-3}-O-(CH_2)_2-SO_2-Z$ oder

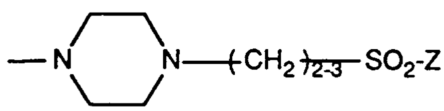

ist, und Z Vinyl, $\beta$-Chloräthyl oder $\beta$-Sulfatoäthyl ist.

Beispiele sind die Reaktivfarbstoffe der Formel (6a), worin $X_1$ ein Rest der Formel

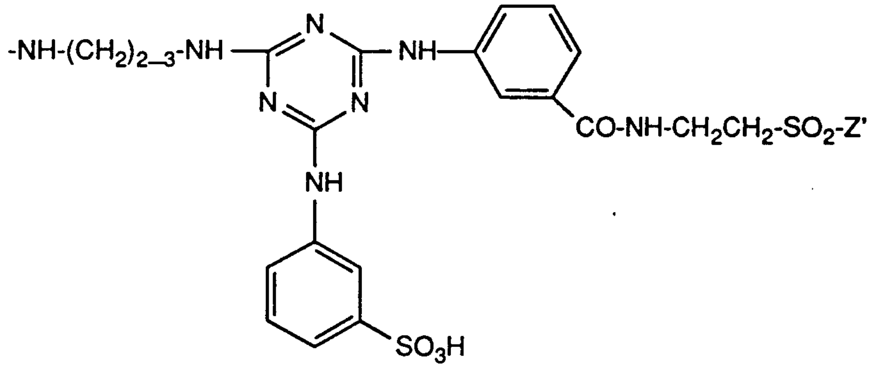

(10),

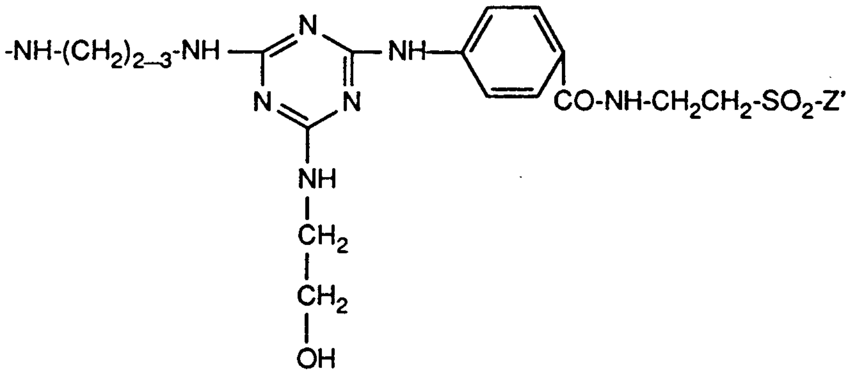

(10a),

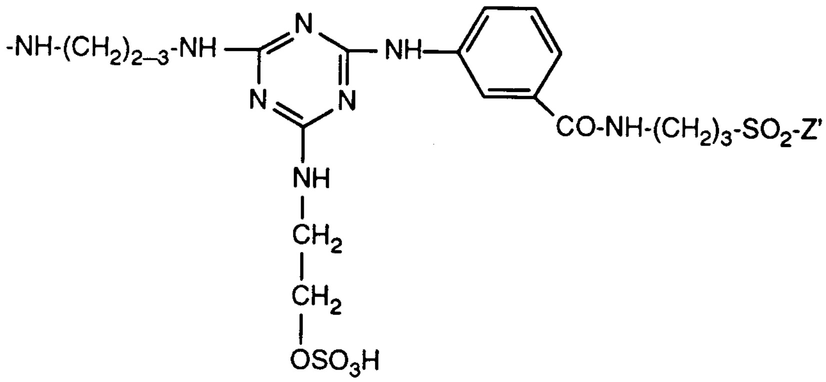

(10b),

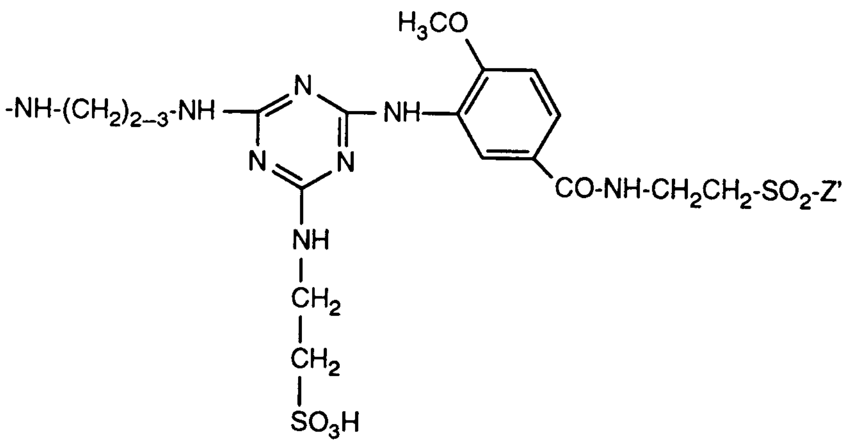

(10c),

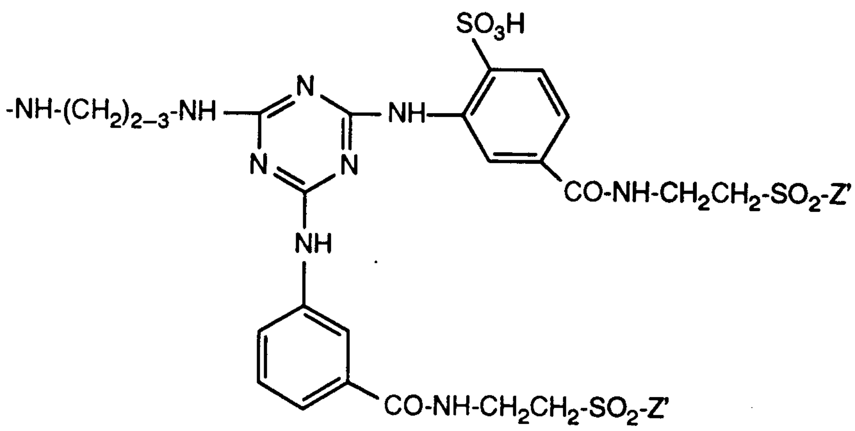

(11),

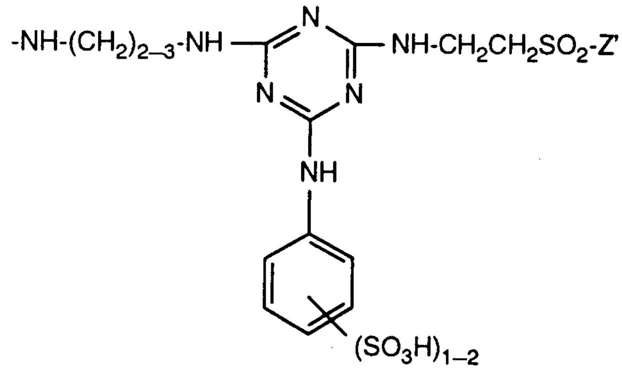

(11a),

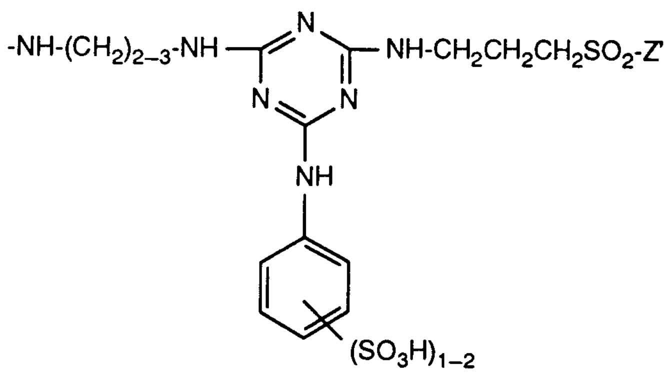

(11b),

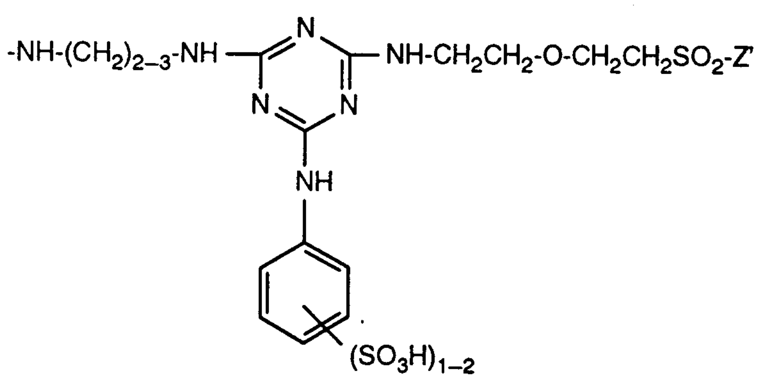

(12),

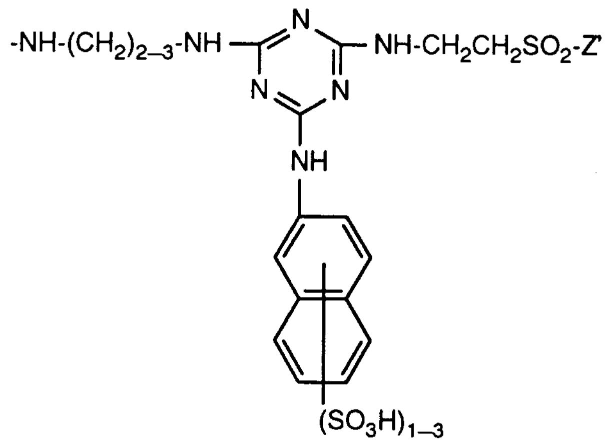

(12a),

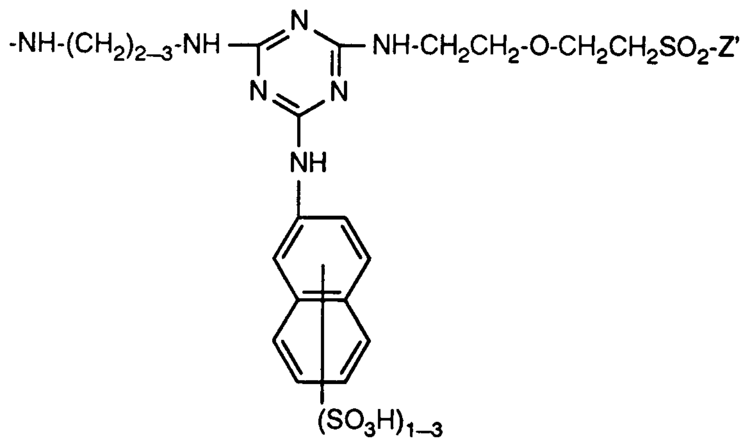

(12b),

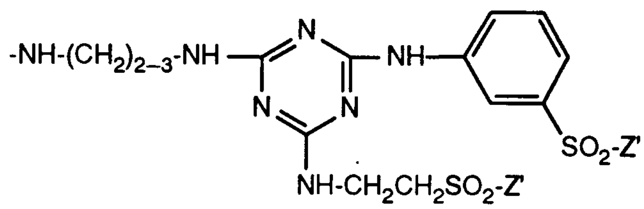

(13),

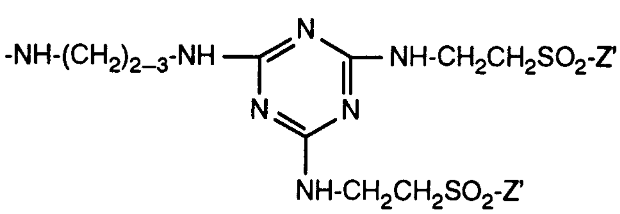

(13a),

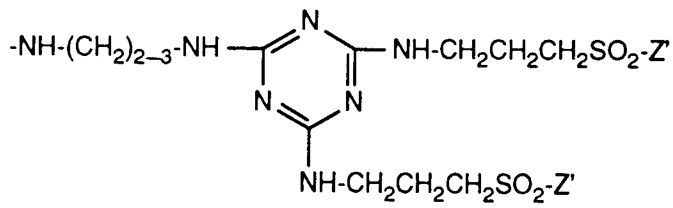

(13b),

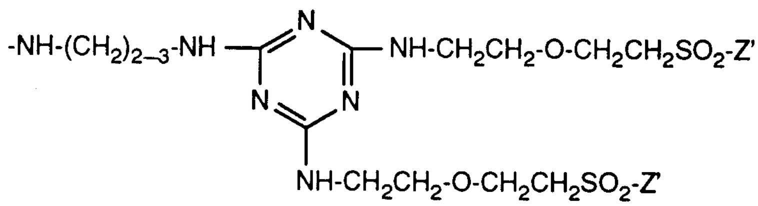

(14),

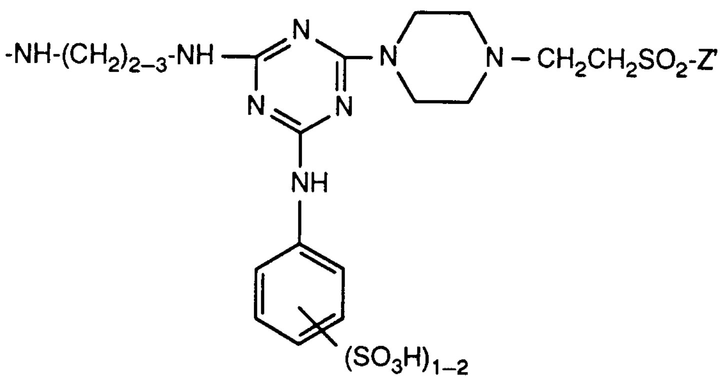

(14a) oder

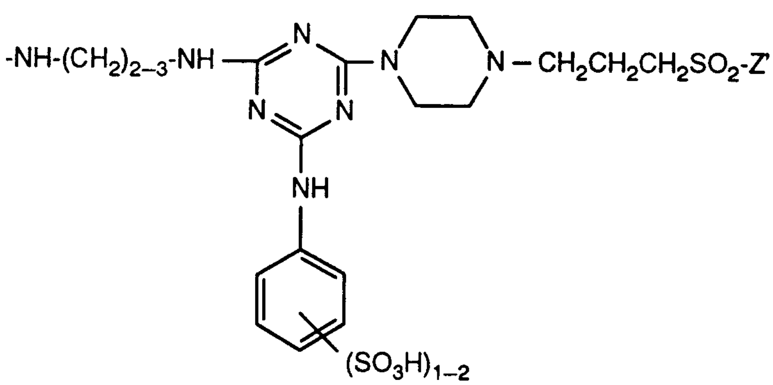

(14b)

ist, worin Z' β-Sulfatoäthyl, β-Chloräthyl oder Vinyl ist, sowie die Reaktivfarbstoffe der Formel (9), worin $X_1$ und $X_2$ je ein Rest der Formeln (10) bis (25) ist, und Z' β-Sulfatoäthyl, β-Chloräthyl oder Vinyl ist.

Ganz besonders wichtig ist der Reaktivfarbstoff der Formel

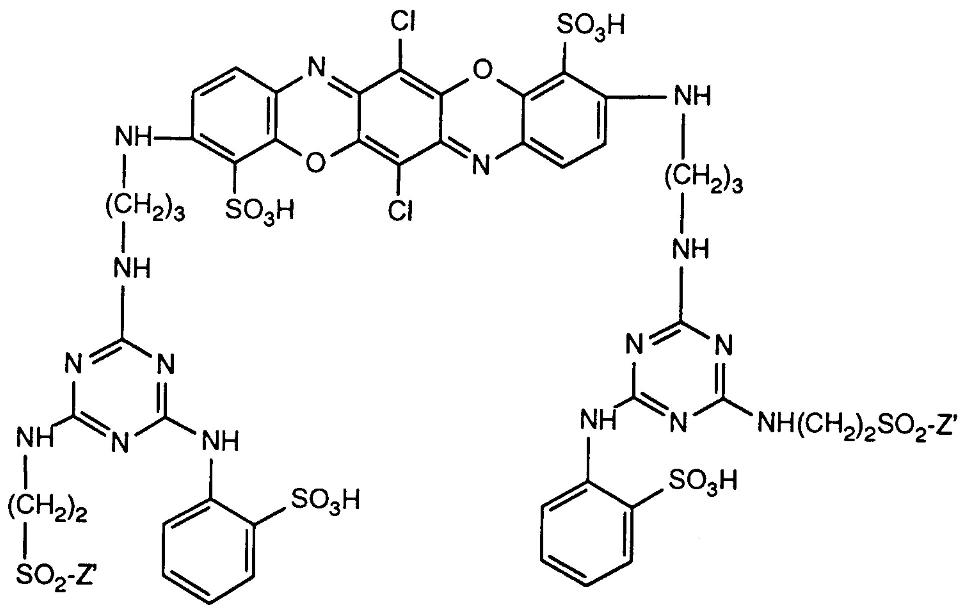

(15),

worin Z' die angegebene Bedeutung hat.

Gegenstand der Erfindung ist ferner ein Verfahren zur Herstellung der Reaktivfarbstoffe der Formel (1), welches dadurch gekennzeichnet ist, dass man Dioxazinverbindungen der Formel

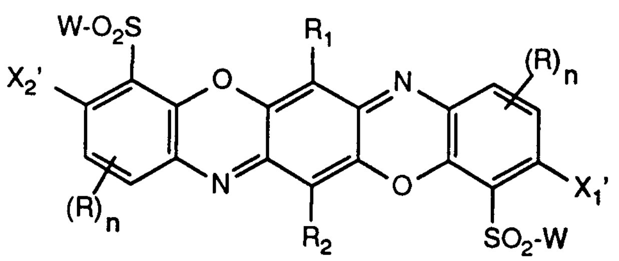

(16),

worin R, $R_1$, $R_2$, W und n die unter Formel (1) angegebenen Bedeutungen haben, und $X_1$' ein Rest der Formel

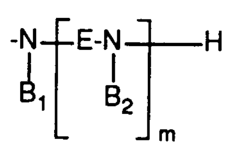

(17),

worin $B_1$, $B_2$, E und m die unter Formel (2) angegebene Bedeutung haben, $X_2$' $-NH_2$ oder ein Rest der Formel (17) ist, mit einem oder zwei Äquivalenten 2,4,6-Trihalogen-s-triazin, mit ein oder zwei Äquivalenten eines der Amine der Formel (18), (19) oder (20)

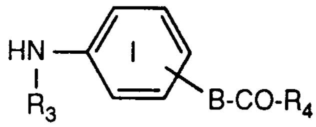

(18),

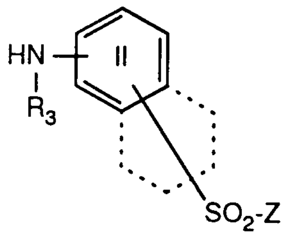

(19),

H-Y (20)

und ein oder zwei Äquivalenten eines Amins der Formel H-A bzw. H-$A_1$ in beliebiger Reihenfolge miteinander umsetzt, wobei $R_3$, A, $A_1$, B, $R_4$, Z, Y, I und II die unter den Formeln (2), (3) und (3a) angegebene Bedeutungen haben.

Bei der Herstellung derartiger Farbstoffe können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Ausführungsformen des erfindungsgemässen Verfahrens sind dadurch gekennzeichnet, dass man:

1. Eine Dioxazinverbindung der Formel (16), worin $X_1$' ein Rest der Formel (17) und $X_2$' $-NH_2$ oder ein Rest der Formel (17) ist, mit ein oder zwei Mol 2,4,6-Trihalogen-s-triazin kondensiert und das erhaltene Kondensationsprodukt mit 1 oder 2 Mol des Amins der Formel (18), (19) oder (20) und mit 1 oder 2 Mol des Amins der Formel H-A bzw. H-$A_1$ kondensiert.

2. Eine Dioxazinverbindung der Formel (16), worin $X_1$' ein Rest der Formel (17) und $X_2$' $-NH_2$ oder ein Rest der Formel (17) ist, mit einer Verbindung der Formel

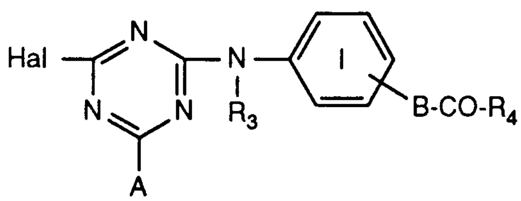

(21),

worin Hal Halogen ist, und A, $R_3$, $R_4$ und I die unter Formel (2) angegebenen Bedeutungen haben, oder mit einer Verbindung der Formel

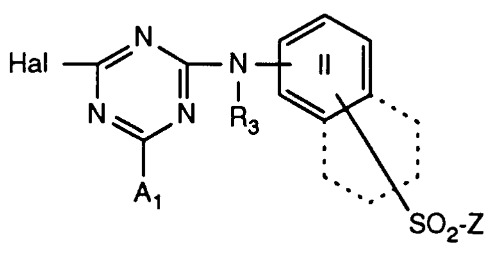

(22),

worin Hal Halogen ist, und $A_1$, $R_3$, Z und II die unter Formel (3) angegebenen Bedeutungen haben, oder mit einer Verbindung der Formel

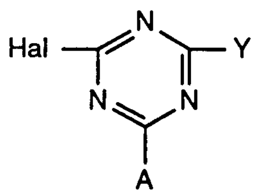

(23),

worin Hal Halogen ist, und A und Y die unter Formel (3a) angegebenen Bedeutungen haben, kondensiert.

Die Kondensation des 2,4,6-Trifluor-s-triazins mit den Dioxazinverbindungen der Formel (16) erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit Aminen setzt man die freien Amine oder deren Salze, bevorzugt in Form des Hydrochlorids, ein. Die Umsetzung wird bei Temperaturen etwa zwischen 0 und 40°C, bevorzugt zwischen 5 und 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Halogentriazins mit einem Amin kann vor oder nach der Kondensation des Halogentriazins mit einem Dioxazin der Formel (1) geschehen. Die Kondensation des Halogentriazins mit einem Amin erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die als Ausgangsstoffe verwendeten Dioxazinverbindungen der Formel (16) werden in üblicher Weise durch Ringschluss aus dem Anil der Formel

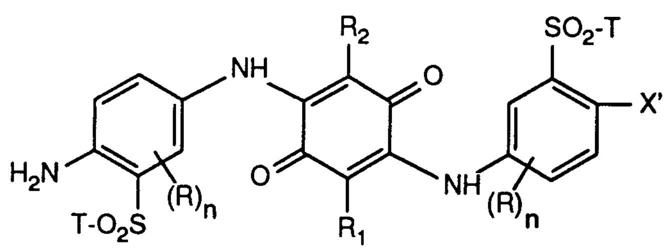

(24)

hergestellt.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Die Reaktivfarbstoffe der Formel (1) eignen sich zum Farben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Farben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten.

Sie eignen sich sowohl für das Ausziehverfahren als auch zum Farben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-FarbstoffBindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter. Die Herstellung der Zwischenverbindung ist in den nachfolgenden Ausführungsbeispielen nicht in allen Fällen beschrieben, sie ergibt sich jedoch ohne weiteres aus der allgemeinen Beschreibung.

Beispiel 1: 17,3 Teile 1-Aminobenzol-2-sulfonsäure werden in wässriger Lösung mit 18,3 Teilen Cyanurchlorid bei 0 °C und pH 6-7 kondensiert. Das erhaltene Monokondensationsprodukt wird mit 27,5 Teilen 2-(γ-Aminopropylamino)-5-nitrobenzolsulfonsäure bei Raumtemperatur bis etwa 30 °C und pH 7-9 kondensiert. 55,9 Teile der so erhaltenen Verbindung werden mit 13,0 Teilen β-(β'-Aminoäthylthio)-äthanol bei 30 bis 60 °C und pH 7-9 umgesetzt. Die entstandene Thioätherverbindung wird in der gleichen Lösung zum Sulfon oxydiert. Zuerst wird die Reaktionsmischung mit Eisessig auf pH 5,0 eingestellt und mit 0,04 g Wolframsäure versetzt. Nun tropft man, bei Raumtemperatur beginnend, 10,6 Volumenteile Wasserstoffperoxid (35%ig) innerhalb von 30 Minuten dazu, wobei man die Temperatur ohne Kühlung ansteigen lässt. Dann wird die Reaktionstemperatur auf 85 °C eingestellt, und es werden nochmals 10,6 Volumenteile Wasserstoffperoxid innerhalb von 2 Stunden zugetropft. Zuletzt wird noch 6 Stunden bei 85 °C nachgerührt.

Die danach vorliegende Nitroverbindung der Formel

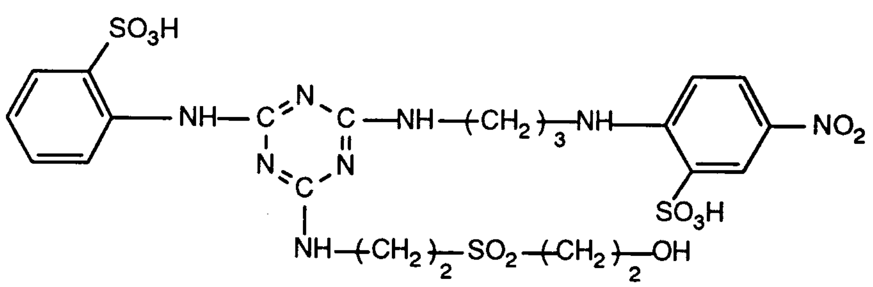 (100)

wird hierauf nach Béchamp reduziert, indem man das Produkt in Portionen in eine kochende Mischung von 200 Teilen Wasser, 25 Teilen Eisenpulver und 2 Teilen Eisessig einträgt. Nach beendeter Reduktion wird das Reaktionsgemisch mit ca. 16 Teilen 10-n Natriumhydroxidlösung auf pH 12 bis 13 gestellt und heiss vom Eisenschlamm abfiltriert. Das Filtrat wird mit etwas Hydrosulfit entfärbt und mit ca. 11 Teilen 10-n Salzsäure auf pH 7 gestellt.

Die Reduktion kann auch durch katalytische Hydrierung mit Pd/Kohlenstoff in Aethanol, Essigester oder Tetrahydrofuran bei Raumtemperatur bis etwa 40 °C durchgeführt werden.

Zur Vervollständigung der Abscheidung werden noch ca. 10 Vol.% Kochsalz zugegeben. Man lässt erkalten und filtriert die gebildete Aminoverbindung ab.

64,6 Teile dieser Aminoverbindung und 12,2 Teile Chloranil werden in 150 Teilen Wasser aufgeschlämmt und auf 60 °C erwärmt. Durch Zutropfen von ca. 50 Teilen 2-n Natriumhydroxidlösung wird der pH-Wert während der Kondensation bei 5-6 gehalten. Nach ca. 12 Stunden lässt man erkalten und filtriert das Reaktionsprodukt. Nach dem Waschen mit Wasser wird das erhaltene Anil im Vakuum bei 100 °C

getrocknet.

80 Teile des so erhaltenen Anils werden im Laufe von ca. 40 Minuten in 1600 Teile Oleum 24 % eingetragen. Die Temperatur steigt auf ca. 40 ° C und es entsteht eine olivbraune Lösung. Man erwärmt das Reaktionsgemisch innert ca. 15 Minuten auf 65 ° C und hält diese Temperatur während ca. 1 Stunde. Dabei entsteht eine tiefblaue Lösung. Man kühlt auf Zimmertemperatur und trägt die Oleumlösung unter Rühren auf 4000 Teile Eis aus. Unter Eiskühlung werden hierauf innert ca. 1 Stunde 2500 Teile 10-n Natriumhydroxidlösung zugetropft. Es entsteht eine klare Lösung, aus welcher der fertige Farbstoff mit 300 Teilen NaCl isoliert wird. Nach der Filtration wird die Farbstoffpaste mit einer gesättigten Lösung von Dinatriumhydrogenphosphat gepuffert und im Vakuum bei 50 ° C getrocknet. Der so erhaltene Farbstoff entspricht in Form der freien Säure der Formel

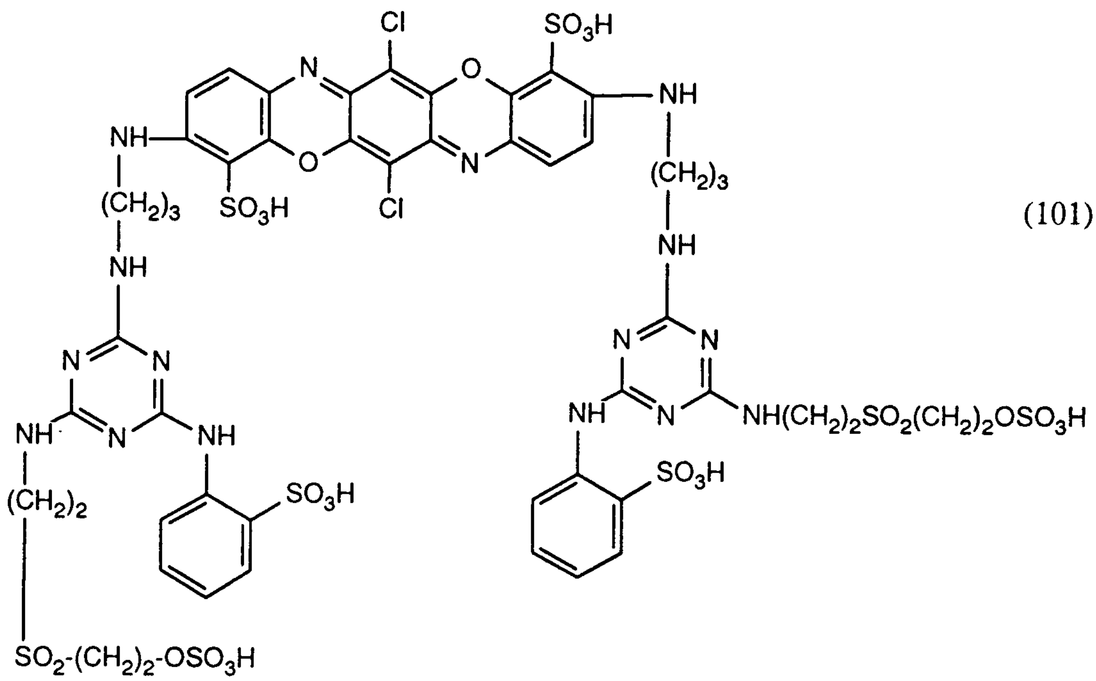

(101)

Er färbt Baumwolle nach den für Reaktionsfarbstoffe üblichen Färbeverfahren in reinen blauen Tönen mit guten Echtheitseigenschaften.

Aehnliche Farbstoffe werden erhalten, wenn anstelle von Anilin-2-sulfonsäure äquivalente Mengen der unten aufgeführten Amine verwendet werden.

| Beispiel | Amine |
|---|---|
| 2 | Ammoniak |
| 3 | Methylamin |
| 4 | Aethanolamin |
| 5 | Diäthanolamin |
| 6 | Taurin |
| 7 | n-Butylamin |
| 8 | Anilin |
| 9 | N-Methylanilin |
| 10 | N-Aethylanilin |
| 11 | m-Toluidin |
| 12 | p-Toluidin |
| 13 | m-Chloranilin |
| 14 | p-Chloranilin |
| 15 | o-Anisidin |
| 16 | p-Anisidin |
| 17 | p-Phenetidin |
| 18 | p-Aminobenzoesäure |
| 19 | Anilin-3-sulfonsäure |
| 20 | 4-Aminoacetanilid |
| 21 | 3-Aminophenylharnstoff |
| 22 | 4-Aminophenylharnstoff |
| 23 | Diäthylamin |
| 24 | Morpholin |
| 25 | 2-Naphthylamin-6-sulfonsäure |
| 26 | 4-Aminosalicylsäure |
| 27 | Anilin-2,4-disulfonsäure |
| 28 | Anilin-2,5-disulfonsäure |
| 29 | Anilin-3,5-disulfonsäure |
| 30 | Anthranilsäure |
| 31 | m-Aminobenzoesäure |
| 32 | Sulfanilsäure |
| 33 | 2-Aminotoluol-4-sulfonsäure |
| 34 | 2-Aminotoluol-5-sulfonsäure |
| 35 | 4-Methylanilin-2,5-disulfonsäure |
| 36 | 3-Methoxyanilin-2,5-disulfonsäure |
| 37 | 2-Naphthylamin-1-sulfonsäure |
| 38 | 2-Naphthylamin-1,5-disulfonsäure |
| 39 | 2-Naphthylamin-4,8-disulfonsäure |
| 40 | 2-Naphthylamin-6,8-disulfonsäure |
| 41 | 1-Naphthylamin-2,4,8-trisulfonsäure |
| 42 | 1-Naphthylamin-2,5,7-trisulfonsäure |
| 43 | 1-Naphthylamin-3,6,8-trisulfonsäure |
| 44 | 1-Naphthylamin-4,6,8-trisulfonsäure |
| 45 | 2-Naphthylamin-1,5,7-trisulfonsäure |
| 46 | 2-Naphthylamin-3,6,8-trisulfonsäure |

Beispiel 47: 62,9 g des Farbstoffes der Formel

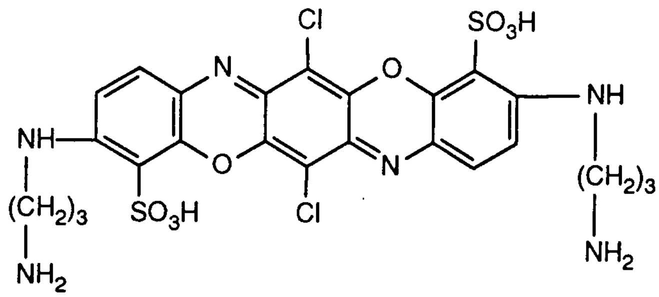

(102)

werden in 1000 ml Wasser bei ph 10 heiss gelöst und dann rasch auf 0-5 ° C gebracht. Nun werden 37,6 g Cyanurchlorid zusammen mit Eis gemahlen und rasch der Farbstofflösung zugesetzt und bei einem konstanten ph von etwa 9 und bei 0-5 ° C kondensiert. Die erhaltene Suspension wird bei ph 7 mit 72 g 2-Sulfatoethylsulfonyl-2'-aminoethan Hydrogensulfat versetzt und bei 35 ° C weiterkondensiert. Daraufhin wird nach Zugabe von 38 g Anilin-3-sulfonsäure bei ph 6 und 70-80 ° C so lange gerührt bis der Umsatz nahezu vollständig ist, welches man durch Dünnschichtchromatographie überprüft. Nach der Isolierung erhält man ein gut lösliches Farbstoffpulver der Formel

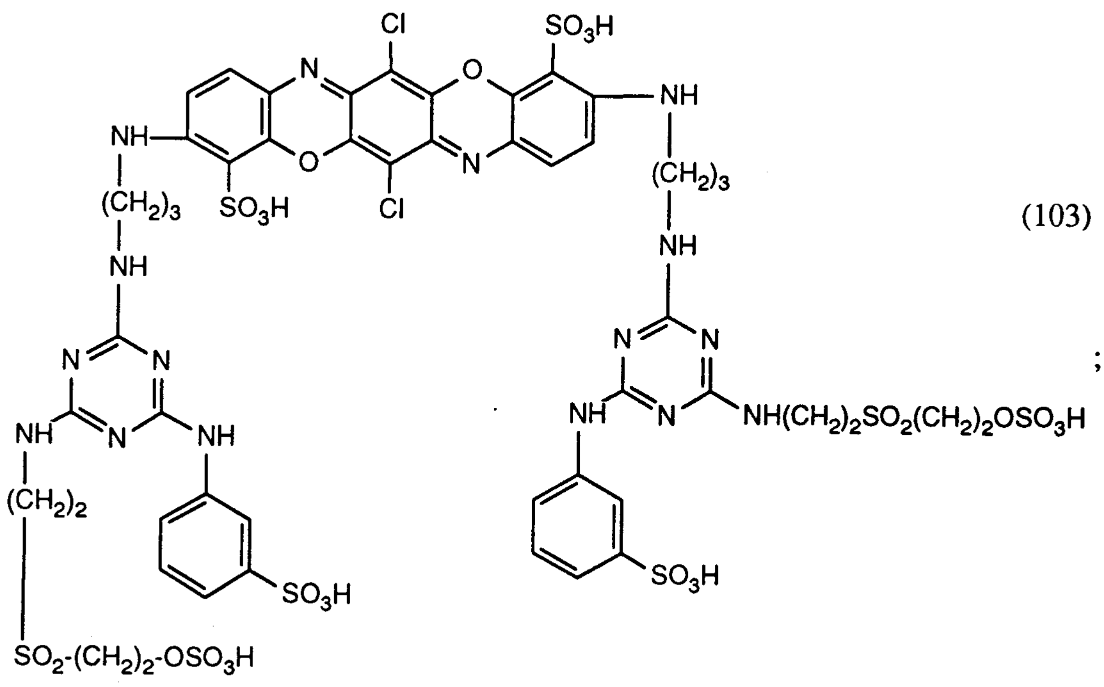

(103)

;

es färbt Baumwolle nach den für Reaktivfarbstoffe üblichen Färbeverfahren in reinen blauen Tönen mit guten Echtheitseigenschaften.

Beispiele 48-70: Geht man analog den Beispielen 1 bzw. 47 vor, so erhält man bei Verwendung der entsprechenden Edukte die folgenden Farbstoffe der Formeln:

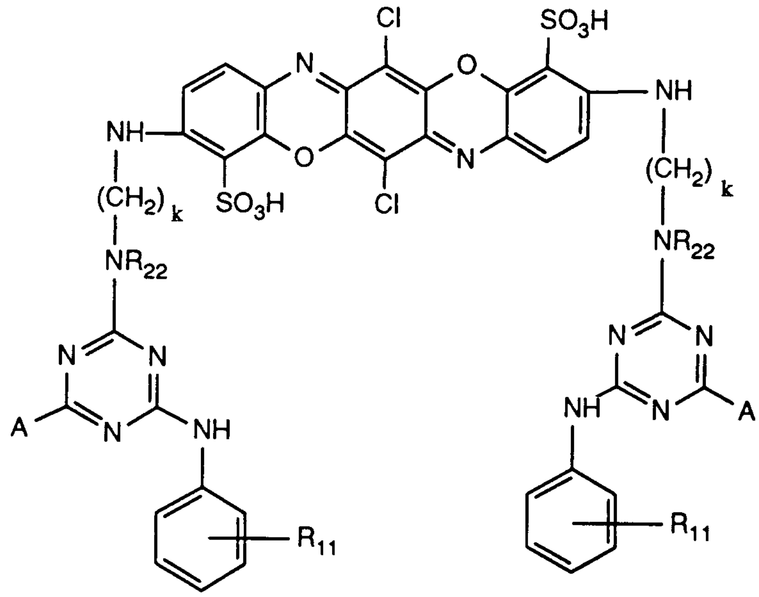

| Bsp. | $R_{22}$ | $R_{11}$ | k = | A = |
|---|---|---|---|---|
| 48 | H | 2-$SO_3H$ | 3 | $-NHCH_2CH_2CH_2SO_2CH_2CH_2OSO_3H$ |
| 49 | H | 2-$SO_3H$ | 3 | $-NHCH_2CH_2SO_2CH_2CH_2OSO_3H$ |
| 50 | H | 2-$SO_3H$ | 2 | $-NHCH_2CH_2SO_2CH_2CH_2OSO_3H$ |
| 51 | H | 2-$SO_3H$ | 2 | $-NHCH_2CH_2CH_2SO_2CH_2CH_2OSO_3H$ |
| 52 | H | 2-$SO_3H$ | 2 | $-NHCH_2CH_2OCH_2CH_2SO_2CH_2CH_2OSO_3H$ |
| 53 | H | 2-$SO_3H$ | 3 | $-NHCH_2CH_2OCH_2CH_2SO_2CH_2CH_2OSO_3H$ |
| 54 | H | 3-$SO_3H$ | 3 | $-NHCH_2CH_2OCH_2CH_2SO_2CH_2CH_2OSO_3H$ |
| 55 | H | 3-$SO_3H$ | 2 | -NH-$C_6H_5$-4-$CONHCH_2CH_2SO_2CH_2CH_2OSO_3H$ |
| 56 | H | 2-$SO_3H$ | 4 | -NH-$C_6H_5$-3-$CONHCH_2CH_2SO_2CH_2CH_2OSO_3H$ |
| 57 | H | 2-$SO_3H$ | 2 | -NH-$C_6H_5$-3-$CONHCH_2CH_2SO_2CH_2CH_2OSO_3H$ |
| 58 | H | 3-$SO_3H$ | 2 | -NH-$C_6H_5$-3-$CONHCH_2CH_2SO_2CH_2CH_2OSO_3H$ |
| 59 | H | 2-$SO_3H$ | 3 | -NH-$C_6H_5$-3-$CONHCH_2CH_2SO_2CH_2CH_2OSO_3H$ |
| 60 | H | 2-$SO_3H$ | 4 | -NH-$C_6H_5$-3-$CONHCH_2CH_2SO_2CH_2CH_2Cl$ |
| 61 | H | 4-$SO_3H$ | 2 | -NH-$C_6H_5$-3-$CONHCH_2CH_2SO_2CH_2CH_2OSO_3H$ |
| 62 | H | 4-$SO_3H$ | 3 | -NH-$C_6H_5$-3-$CONHCH_2CH_2SO_2CH_2CH_2OSO_3H$ |
| 63 | H | 2-$SO_3H$ | 2 | -NH-$C_6H_5$-3-$CONH(CH_2)_4SO_2CH_2CH_2OSO_3H$ |
| 64 | H | 2-$SO_3H$ | 3 | -NH-$C_6H_5$-4-$CONHCH_2CH_2SO_2CH_2CH_2OSO_3H$ |
| 65 | H | 2-$SO_3H$ | 4 | -NH-$C_6H_5$-3-$CONHCH_2CH_2CH_2SO_2CH_2CH_2OSO_3H$ |
| 66 | H | 2-$SO_3H$ | 2 | -NH-$C_6H_5$-3-$CONH(CH_2)_2O(CH_2)_2SO_2(CH_2)_2OSO_3H$ |
| 67 | H | 2-5-Di-$SO_3H$ | 2 | -NH-$C_6H_5$-3-$CONHCH_2CH_2CH_2SO_2CH_2CH_2OSO_3H$ |
| 68 | H | 3-$SO_3H$ | 2 | -NH-$C_6H_5$-3-$CONHCH_2CH_2CH_2SO_2CH_2CH_2OSO_3H$ |
| 69 | $CH_3$ | 3-$SO_3H$ | 3 | -NH-$C_6H_5$-3-$CONHCH_2CH_2CH_2SO_2CH_2CH_2OSO_3H$ |
| 70 | H | 2-$SO_3H$ | 2 | -NH-$C_6H_5$-3-$CONHCH_2CH_2CH_2SO_2CH_2CH_2OSO_3H$ |

Färbevorschrift 1

2 Teile des gemäss Beispiel 1 erhaltenen Farbstoffes werden unter Zusatz von 5 bis 20 Teilen Harnstoff und 2 Teilen wasserfreiem $Na_2CO_3$ in 100 Teilen Wasser bei 20 bis 50 °C gelöst. Mit der erhaltenen Lösung wird ein Baumwollgewebe imprägniert, man quetscht auf 60 bis 80 % Gewichtszunahme

ab, und trocknet dann. Danach wird während 1/2 bis 5 Minuten bei 140 bis 210 °C thermofixiert, dann während einer Viertelstunde in einer 0,1%igen kochenden Lösung eines ionenfreien Waschmittels geseift, gespült und getrocknet.

Färbevorschrift 2

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, und auf 75 % Gewichtszunahme abgequetscht, und dann getrocknet.

Danach imprägniert man das Gewebe mit einer 20° warmen Lösung, die pro Liter 5 Gramm Natriumhydroxid und 300 Gramm Natriumchlorid enthält, quetscht auf 75 % Gewichtszunahme ab, dämpft die Färbung während 30 Sekunden bei 100 bis 101°, seift während einer Viertelstunde in einer 0,3%igen kochenden Lösung eines ionenfreien Waschmittels, spült und trocknet.

Färbevorschrift 3 2 Teile des gemäss Beispiel 1 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60 °C, wobei nach 30 Minuten 40 Teile wasserfreies $Na_2CO_3$ und nochmals 60 Teile Natriumchlorid zugegeben werden. Man hält die Temperatur 30 Minuten auf 60 °C, spült und seift dann die Färbung während 15 Minuten in einer 0,3%igen kochenden Lösung eines ionenfreien Waschmittels, spült und trocknet.

Färbevorschrift 4

4 Teile des in Beispiel 1 hergestellten Reaktivfarbstoffes werden in 50 Teilen Wasser gelöst. Dazu gibt man 50 Teile einer Lösung, die pro Liter 5 g Natriumhydroxid und 10 g wasserfreies $Na_2CO_3$ enthält. Mit der erhaltenen Lösung wird ein Baumwollgewebe foulardiert, quetscht auf 70 % Gewichtszunahme ab, und wickelt das Baumwollgewebe dann auf eine Kaule. Das Baumwollgewebe wird so während 3 bis 12 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

**Patentansprüche**

**Patentansprüche für folgende Vertragsstaaten : BE, CH, DE, FR, GB, IT, LI**

1. Reaktivfarbstoffe der Formel

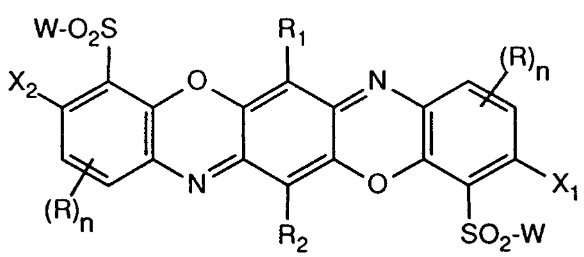

(1),

worin $R_1$ und $R_2$ Wasserstoff, Chlor, Brom, $C_1$-$C_4$-Alkyl, $C_1$-$C_4$-Alkoxy oder gegebenenfalls substituiertes Phenyl oder gegebenenfalls substituiertes Phenoxy bedeuten; $(R)_n$ für n Substituenten R steht, die unabhängig voneinander $C_1$-$C_4$-Alkyl, $C_1$-$C_4$-Alkoxy, Halogen, Sulfo, Carboxy, Carbamoyl, N-$C_1$-$C_4$-Alkylcarbamoyl,

N,N-Di-$C_1$-$C_4$-alkylcarbamoyl, $C_1$-$C_4$-Alkylsulfonyl, Sulfamoyl, N-$C_1$-$C_4$-Alkylsulfamoyl oder N,N-Di-$C_1$-$C_4$-alkylsulfamoyl sein können;

W Hydroxy oder $C_1$-$C_6$-Alkyl, das durch Hydroxy, Carboxy, Sulfo, Sulfato, Chlor, $C_1$-$C_4$-Alkoxy, Carbamoyl, Sulfamoyl oder einen Rest

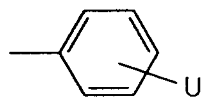 oder

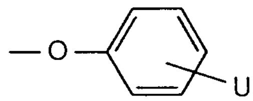

worin U Sulfo, Sulfato, Hydroxy oder Carboxy ist, substituiert sein kann;
n = 0, 1 oder 2;
$X_1$ ein Rest der Formel

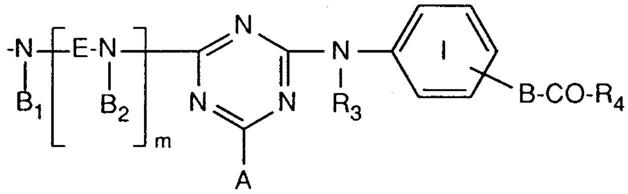 (2),

worin $B_1$ und $B_2$ unabhängig voneinander Wasserstoff oder gegebenenfalls substituiertes $C_1$-$C_4$-Alkyl;
E $C_2$-$C_4$-Alkylen, das durch Halogen, Hydroxy, Carboxy, Sulfo, Phenyl, Sulfophenyl oder $C_1$-$C_4$-Alkoxycarbonyl substituiert sein kann, oder Cyclohexylen ist, das durch $C_1$-$C_4$-Alkyl substituiert sein kann;
oder worin die Gruppe -N($B_1$)-E-N($B_2$)-1,4-Piperazindiyl ist;
m = 0 oder 1;
A der Rest eines Amins;
$R_3$ Wasserstoff oder gegebenenfalls substituiertes $C_1$-$C_4$-Alkyl; B die direkte Bindung oder ein Rest

$$-(CH_2)_{n'}- \text{ oder } -O-(CH_2)_{n'}- ;$$

n' = 1, 2, 3, 4, 5 oder 6;
$R_4$ ein Rest der Formel

$-N-(alk)-CH_2-SO_2-Z$ (2a)
|
V

T
|
$-N-(alk)-CH_2-SO_2-Z$ (2b)
|
R'

$-N-(CH_2)_p-O-(CH_2)_q-SO_2-Z$ (2c)
|
R'

$-N-(alk')-NH-(alk')-SO_2-Z$ (2d)
|
R'

$-N-(CH_2)_r-N[(CH_2)_s-SO_2-Z]_2$ (2e) oder
|
R'

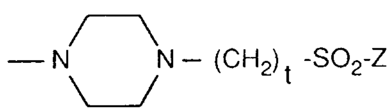 (2f),

worin R' Wasserstoff oder $C_1$-$C_6$-Alkyl ist;
alk einen Alkylenrest mit 1 bis 7 Kohlenstoffatomen darstellt;
T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest $-SO_2-Z$ bedeutet;
V Wasserstoff, gegebenenfalls substituiertes $C_1$-$C_4$-Alkyl oder einen Rest der Formel

T
|
$-(alk)-CH_2-SO_2-Z$ (2g),

worin (alk) die zuvor angegebene Bedeutung hat;
alk' unabhängig voneinander Polymethylenreste mit 2 bis 6 C-Atomen;
Z β-Sulfatoäthyl, β-Thiosulfatoäthyl, β-Phosphatoäthyl, β-Acyloxyäthyl, β-Halogenäthyl oder Vinyl;
p, q, r und t unabhängig voneinander je die Zahl 1, 2, 3, 4, 5 oder 6 bedeuten;
s die Zahl 2, 3, 4, 5 oder 6 und
$X_2$ eine Gruppe $-NH_2$ ist;
oder worin $X_1$ ein Rest der Formel

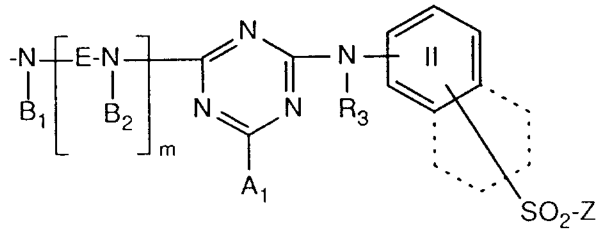

(3),

worin $A_1$ einen der Reste der Formeln (2a) bis (2f), oder einen Rest der Formel

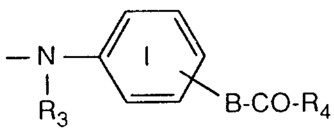

(4)

oder

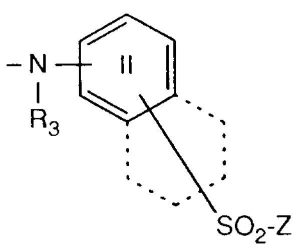

(5)

bedeutet,
worin $B_1$, $B_2$, E, m, $R_3$, $R_4$ und Z die angegebenen Bedeutungen haben, und der Benzolring I und der Benzol- oder NaphthalinringII weitere Substituenten enthalten können, und $X_2$ eine Gruppe $-NH_2$ ist; oder worin $X_1$ ein Rest der Formel (2) und $X_2$ unabhängig von $X_1$ ebenfalls ein Rest der Formel (2) ist; oder worin $X_1$ ein Rest der Formel

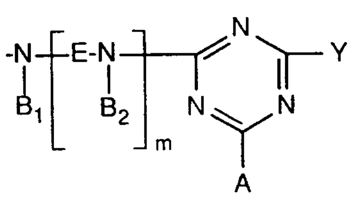

(3a),

worin Y einer der Reste der Formeln (2a) bis (2f) ist, $B_1$, $B_2$, E, A und m die angegebenen Bedeutungen haben, und $X_2$ eine Gruppe $-NH_2$ oder ebenfalls ein Rest der Formel (3a) ist, mit der Bedingung, dass der Rest A in den Formeln (2) und (3a) frei von faserreaktiven Gruppen ist.

**2.** Reaktivfarbstoffe gemäss Anspruch 1, worin $X_1$ ein Rest der Formel (2) oder (3), und $A_1$ ein Rest der Formel

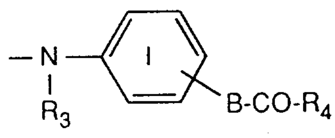

(4)

oder

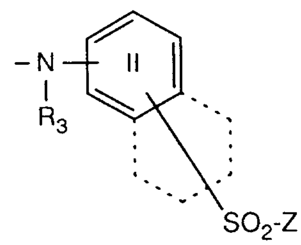

(5)

worin $R_3$, B, $R_4$ und Z die in Anspruch 1 angegebenen Bedeutungen haben, wobei die Reste der Formeln (4) und (5) unabhängig von den analogen Resten in den Formeln (2) und (3) sind, und der Benzolring 1 und der Benzol- oder Naphthalinring II weitere Substituenten enthalten können, und $X_2$ die Gruppe $-NH_2$ ist.

**3.** Reaktivfarbstoffe gemäss Anspruch 1, worin $X_1$ ein Rest der Formel (2), A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist, und $X_2$ die Gruppe $-NH_2$ ist.

**4.** Reaktivfarbstoffe gemäss Anspruch 1, worin $X_1$ und $X_2$ unabhängig voneinander je ein Rest der Formel (2) ist, und A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

**5.** Reaktivfarbstoffe gemäss einem der Ansprüche 1 bis 4, der Formel (1), worin $X_1$ ein Rest der Formel (3a) ist, $B_1$, $B_2$, E und Y die unter Formel (3a) angegebenen Bedeutungen haben und A $-NH_2$ $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Naphthylamino, wobei der Naphthalinkern wie für den Phenylring angegeben, substituiert sein kann, oder Morpholino ist, und $X_2$ die Gruppe $-NH_2$ ist, oder worin $X_1$ und $X_2$ unabhängig voneinander je ein Rest der Formel (2) ist, und A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Naphthylamino, wobei der Naphthalinkern, wie für den Phenylring angegeben, substituiert sein kann, oder Morpholino ist.

**6.** Reaktivfarbstoffe gemäss einem der Ansprüche 1 bis 5, der Formel,

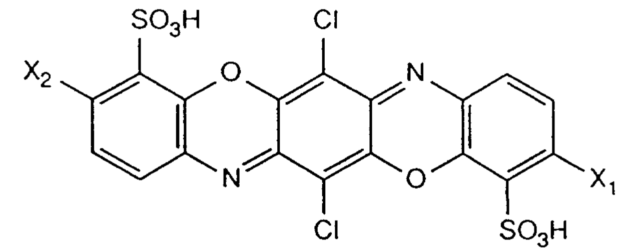

(6),

worin $X_1$ und $X_2$ die in einem der Ansprüche 1 bis 5 angegebenen Bedeutungen haben.

**7.** Reaktivfarbstoffe gemäss einem der Ansprüche 1, 2 und 3, der Formel

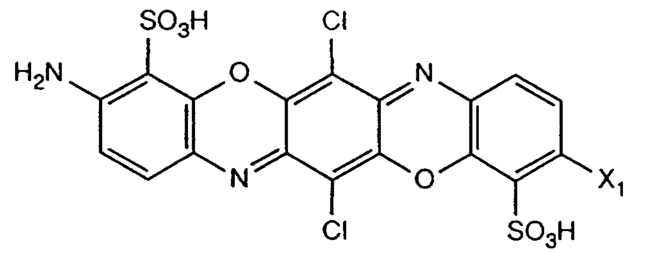

(6a),

worin $X_1$ ein Rest der Formel

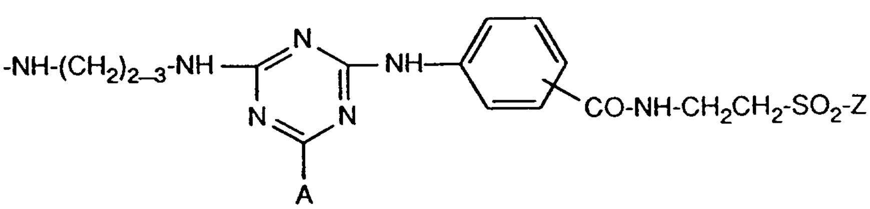

(7),

A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

**8.** Reaktivfarbstoffe gemäss einem der Ansprüche 1 und 4, der Formel

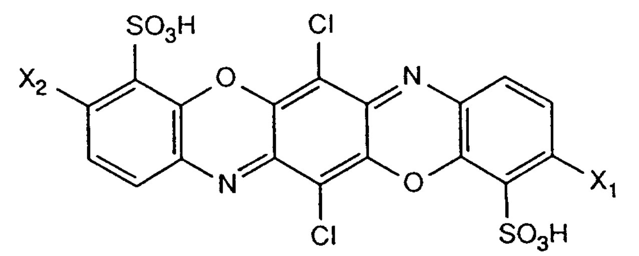

(9),

worin $X_1$ und $X_2$ je ein Rest der Formel

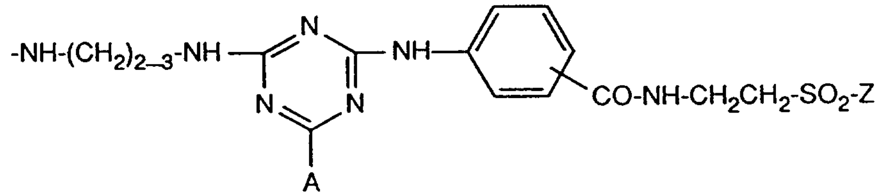

(7),

A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

**9.** Reaktivfarbstoffe gemäss Anspruch 5 der Formel

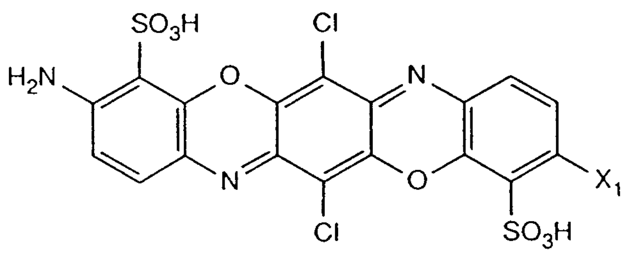

(6a) oder

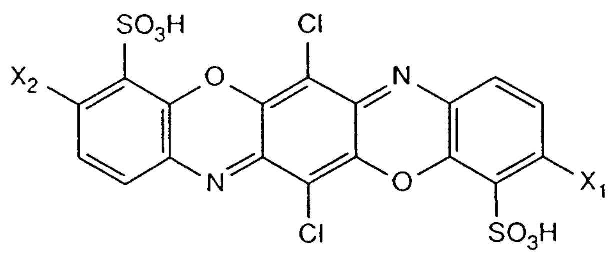

(9),

worin $X_1$ bzw. $X_1$ und $X_2$ je ein Rest der Formel

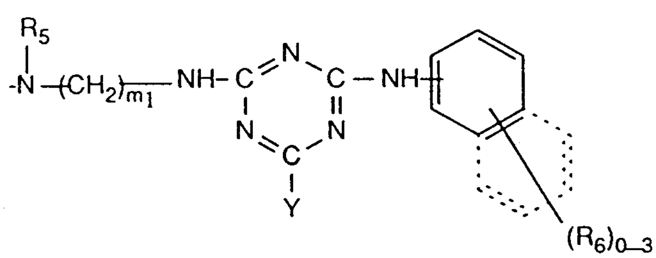

(3aa)

worin $m_1$ = 2, 3, 4, 5 oder 6 und $R_5$ Wasserstoff, Methyl, Aethyl oder Hydroxyäthyl ist, $R_6$ Methyl, Aethyl, Methoxy, Aethoxy, Chlor, Carboxy oder Sulfo ist und Y ein Rest

$-NH-(CH_2)_{m_2}-SO_2-Z$

$-NH-(CH_2)_2-O-(CH_2)_2-SO_2-Z$ oder

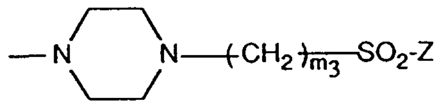

worin $m_2$ und $m_3$ = 2, 3, 4, 5 oder 6, insbesondere 2 oder 3 ist und Z Vinyl, β-Chloräthyl oder β-Sulfatoäthyl ist.

**10.** Reaktivfarbstoffe gemäss Anspruch 9, worin $X_1$ bzw. $X_1$ und $X_2$ je ein Rest der Formel

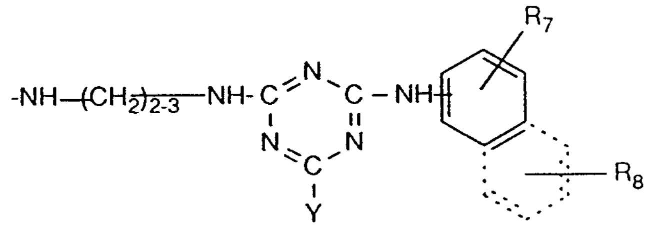

(3ab)

ist, worin $R_7$ und $R_8$ Sulfo ist, oder $R_7$ Wasserstoff und $R_8$ Sulfo ist, oder $R_7$ Sulfo und $R_8$ Wasserstoff ist, und Y ein Rest

$-NH-(CH_2)_{2-3}-SO_2-Z$

$-NH-(CH_2)_2-O-(CH_2)_2-SO_2-Z$ oder

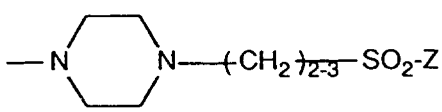

ist, und Z die in Anspruch 9 angegebene Bedeutung hat.

**11.** Verfahren zur Herstellung der Reaktivfarbstoffen gemäss Anspruch 1, dadurch gekennzeichnet, dass man eine Dioxazinverbindung der Formel

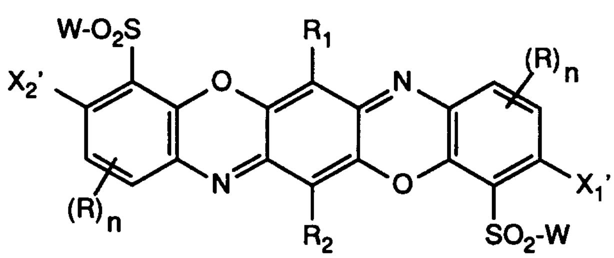

**(16),**

worin R, $R_1$, $R_2$, W und n die unter Formel (1) angegebenen Bedeutungen haben, und $X_1'$ ein Rest der Formel

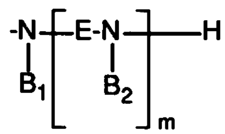

(17),

worin $B_1$, $B_2$, E und m die unter Formel (2) angegebene Bedeutung haben, $X_2$' $-NH_2$ oder ein Rest der Formel (17) ist, mit einer Verbindung der Formel

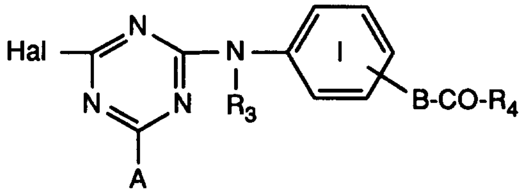

(21),

worin Hal Halogen ist, und A, $R_3$, $R_4$ und I die unter Formel (2) angegebenen Bedeutungen haben, oder mit einer Verbindung der Formel

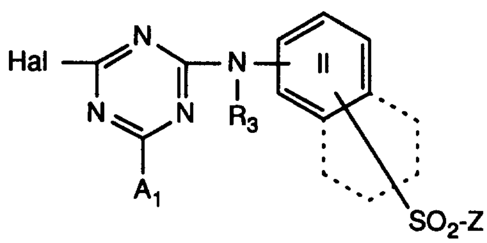

(22),

worin Hal Halogen ist, und $A_1$, $R_3$, Z und II die unter Formel (3) angegebenen Bedeutungen haben, oder mit einer Verbindung der Formel

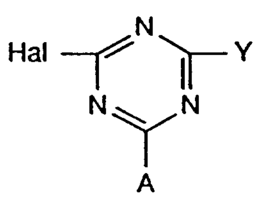

(23),

worin Hal Halogen ist, und A und Y die unter Formel (3a) angegebenen Bedeutungen haben, kondensiert.

**12.** Verfahren zur Herstellung der Reaktivfarbstoffe gemäss Anspruch 1, dadurch gekennzeichnet, dass man ein Äquivalent 2,4,6-Trihalogen-s-triazin mit einem Äquivalent eines Amins der Formel,

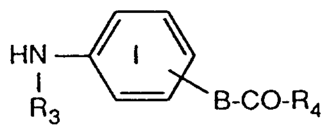

(18),

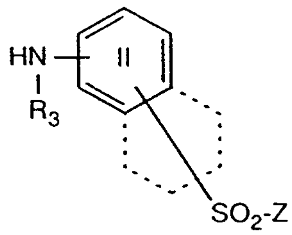

(19) oder

H-Y (20)

und mit einem Äquivalent eines Amins der Formel H-A bzw. H-$A_1$ und mit einem Äquivalent eines Amins der Formel

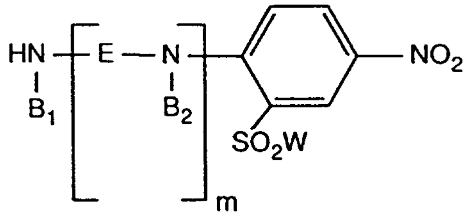

(25)

in beliebiger Reihenfolge nacheinander umsetzt, die erhaltene Nitroverbindung zum Amin reduziert, mit einem halben Äquivalent Chloranil umsetzt und den Ringschluss zur Dioxazinverbindung der Formel (1) durchführt;
wobei A, $A_1$, B, $B_1$, $B_2$, E, m, $R_3$, $R_4$, W, Y, Z, I und II die unter den Formeln (2), (3) und (3a) angegebene Bedeutungen haben.

**13.** Verwendung der Reaktivfarbstoffe gemäss Anspruch 1 zum Färben und Bedrucken von cellulosehaltigen Fasermaterialien.

**14.** Verwendung gemäss Anspruch 13 zum Färben und Bedrucken von Baumwolle.

**Patentansprüche für folgenden Vertragsstaat : ES**

**1.** Verfahren zur Herstellung von Reaktivfarbstoffen der Formel

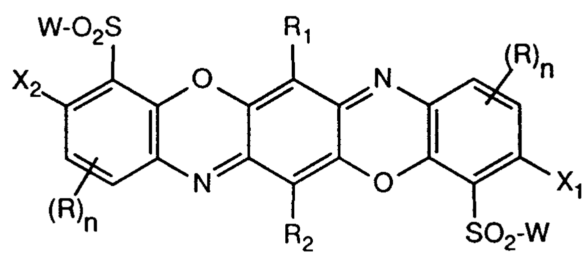

(1),

worin $R_1$ und $R_2$ Wasserstoff, Chlor, Brom, $C_1$-$C_4$-Alkyl, $C_1$-$C_4$-Alkoxy oder gegebenenfalls substituiertes Phenyl oder gegebenenfalls substituiertes Phenoxy bedeuten;
$(R)_n$ für n Substituenten R steht, die unabhängig voneinander $C_1$-$C_4$-Alkyl, $C_1$-$C_4$-Alkoxy, Halogen,

Sulfo, Carboxy, Carbamoyl, N-$C_1$-$C_4$-Alkylcarbamoyl, N,N-Di-$C_1$-$C_4$-alkylcarbamoyl, $C_1$-$C_4$-Alkylsulfonyl, Sulfamoyl, N-$C_1$-$C_4$-Alkylsulfamoyl oder N,N-Di-$C_1$-$C_4$-alkylsulfamoyl sein können;
W Hydroxy oder $C_1$-$C_6$-Alkyl, das durch Hydroxy, Carboxy, Sulfo, Sulfato, Chlor, $C_1$-$C_4$-Alkoxy, Carbamoyl, Sulfamoyl oder einen Rest

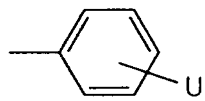

oder

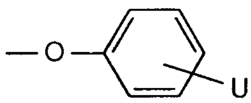

worin U Sulfo, Sulfato, Hydroxy oder Carboxy ist, substituiert sein kann; n = 0, 1 oder 2;
$X_1$ ein Rest der Formel

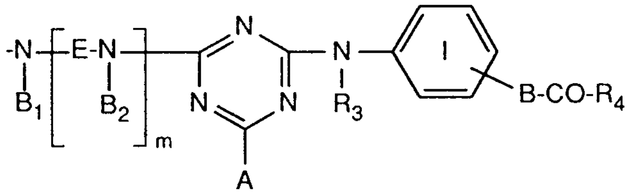

(2),

worin $B_1$ und $B_2$ unabhängig voneinander Wasserstoff oder gegebenenfalls substituiertes $C_1$-$C_4$-Alkyl;
E $C_2$-$C_4$-Alkylen, das durch Halogen, Hydroxy, Carboxy, Sulfo, Phenyl, Sulfophenyl oder $C_1$-$C_4$-Alkoxycarbonyl substituiert sein kann, oder Cyclohexylen ist, das durch $C_1$-$C_4$-Alkyl substituiert sein kann;
oder worin die Gruppe -N($B_1$)-E-N($B_2$)-1,4-Piperazindiyl ist;
m = 0 oder 1;
A der Rest eines Amins;
$R_3$ Wasserstoff oder gegebenenfalls substituiertes $C_1$-$C_4$-Alkyl;
B die direkte Bindung oder ein Rest

$$-(CH_2)_{n'}- \text{ oder } -O-(CH_2)_{n'}- ;$$

n' = 1, 2, 3, 4, 5 oder 6;
$R_4$ ein Rest der Formel

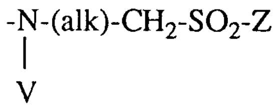

(2a)

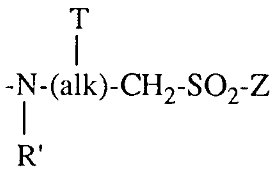

(2b)

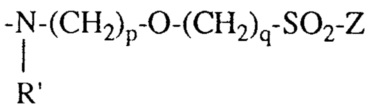

(2c)

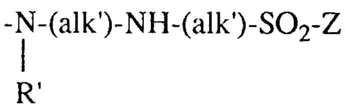

(2d)

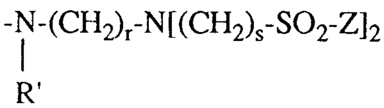

(2e) oder

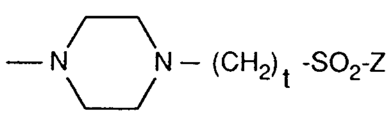

(2f),

worin R' Wasserstoff oder $C_1$-$C_6$-Alkyl ist;
alk einen Alkylenrest mit 1 bis 7 Kohlenstoffatomen darstellt;
T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest $-SO_2$-Z bedeutet;
V Wasserstoff, gegebenenfalls substituiertes $C_1$-$C_4$-Alkyl oder einen Rest der Formel

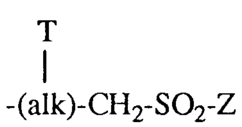

(2g),

worin (alk) die zuvor angegebene Bedeutung hat;
alk' unabhängig voneinander Polymethylenreste mit 2 bis 6 C-Atomen;
Z β-Sulfatoäthyl, β-Thiosulfatoäthyl, β-Phosphatoäthyl, β-Acyloxyäthyl, β-Halogenäthyl oder Vinyl;
p, q, r und t unabhängig voneinander je die Zahl 1, 2, 3, 4, 5 oder 6 bedeuten;
s die Zahl 2, 3, 4, 5 oder 6 und
$X_2$ eine Gruppe $-NH_2$ ist;
oder worin $X_1$ ein Rest der Formel

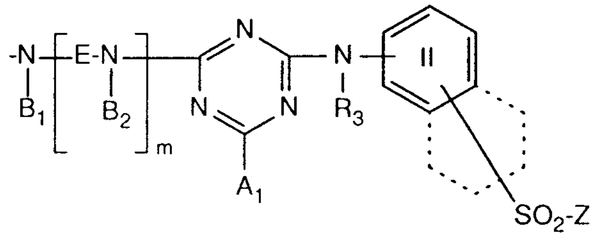

(3),

worin $A_1$ einen der Reste der Formeln (2a) bis (2f), oder einen Rest der Formel

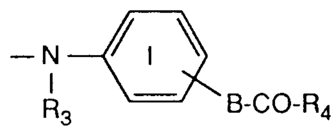

(4)

oder

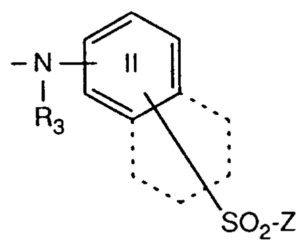

(5)

bedeutet,
worin $B_1$, $B_2$, E, m, $R_3$, $R_4$ und Z die angegebenen Bedeutungen haben, und der Benzolring I und der Benzol- oder NaphthalinringII weitere Substituenten enthalten können, und $X_2$ eine Gruppe $-NH_2$ ist; oder worin $X_1$ ein Rest der Formel (2) und $X_2$ unabhängig von $X_1$ ebenfalls ein Rest der Formel (2) ist; oder worin $X_1$ ein Rest der Formel

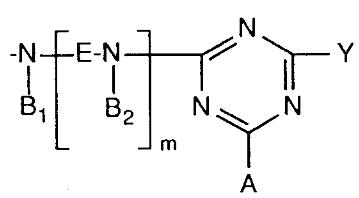

(3a),

worin Y einer der Reste der Formeln (2a) bis (2f) ist, $B_1$, $B_2$, E, A und m die angegebenen Bedeutungen haben, und $X_2$ eine Gruppe $-NH_2$ oder ebenfalls ein Rest der Formel (3a) ist, mit der Bedingung, dass der Rest A in den Formeln (2) und (3a) frei von faserreaktiven Gruppen ist, dadurch gekennzeichnet, dass man eine Dioxazinverbindung der Formel

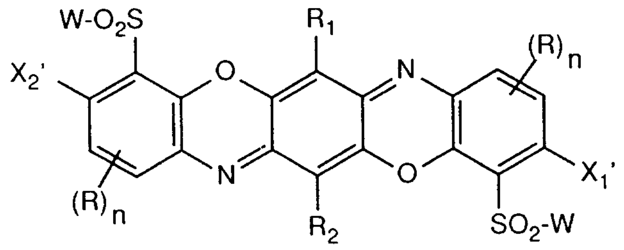

(16),

worin R, $R_1$, $R_2$, W und n die unter Formel (1) angegebenen Bedeutungen haben, und $X_1$' ein Rest der Formel

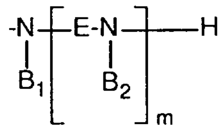

(17),

worin $B_1$, $B_2$, E und m die unter Formel (2) angegebene Bedeutung haben, $X_2$' $-NH_2$ oder ein Rest der Formel (17) ist, mit einer Verbindung der Formel

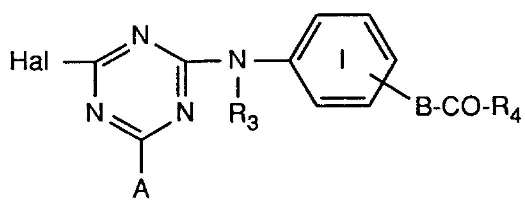

(21),

worin Hal Halogen ist, und A, $R_3$, $R_4$ und I die unter Formel (2) angegebenen Bedeutungen haben, oder mit einer Verbindung der Formel

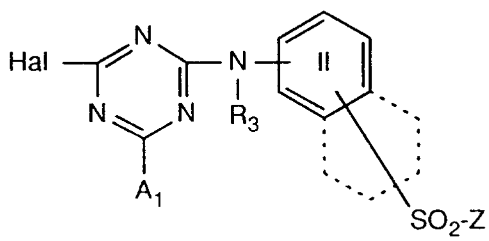

(22),

worin Hal Halogen ist, und $A_1$, $R_3$, Z und II die unter Formel (3) angegebenen Bedeutungen haben, oder mit einer Verbindung der Formel

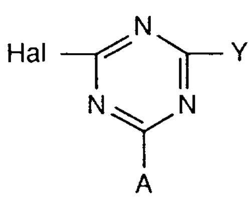

(23),

worin Hal Halogen ist, und A und Y die unter Formel (3a) angegebenen Bedeutungen haben, kondensiert.

**2.** Verfahren gemäss Anspruch 1, dadurch gekennzeichnet, dass man eine Dioxazinverbindung der Formel (1) herstellt, worin $X_1$ ein Rest der Formel (2) oder (3), und $A_1$ ein Rest der Formel

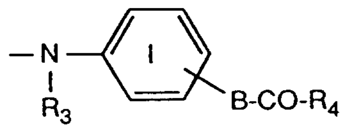

(4)

oder

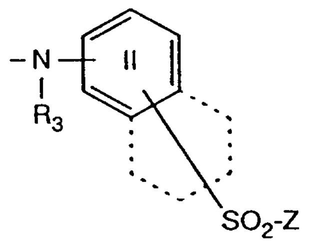

(5)

worin $R_3$, B, $R_4$ und Z die in Anspruch 1 angegebenen Bedeutungen haben, wobei die Reste der Formeln (4) und (5) unabhängig von den analogen Resten in den Formeln (2) und (3) sind, und der Benzolring I und der Benzol- oder Naphthalinring II weitere Substituenten enthalten können, und $X_2$ die Gruppe $-NH_2$ ist.

**3.** Verfahren gemäss Anspruch 1, dadurch gekennzeichnet, dass man eine Dioxazinverbindung herstellt, worin $X_1$ ein Rest der Formel (2), A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist, und $X_2$ die Gruppe $-NH_2$ ist.

**4.** Verfahren gemäss Anspruch 1, dadurch gekennzeichnet, dass man eine Dioxazinverbindung der Formel (1) herstellt, worin $X_1$ und $X_2$ unabhängig voneinander je ein Rest der Formel (2) ist, und A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

**5.** Verfahren gemäss einem der Ansprüche 1 bis 4, dadurch gekennzeichnet, dass man eine Dioxazinverbindung der Formel (1) herstellt, worin $X_1$ ein Rest der Formel (3a) ist, $B_1$, $B_2$, E und Y die unter Formel (3a) angegebenen Bedeutungen haben und A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Naphthylamino, wobei der Naphthalinkern wie für den Phenylring angegeben, substituiert sein kann, oder Morpholino ist, und $X_2$ die Gruppe $-NH_2$ ist, oder worin $X_1$ und $X_2$ unabhängig voneinander je ein Rest der Formel (2) ist, und A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch

Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Naphthylamino, wobei der Naphthalinkern, wie für den Phenylring angegeben, substituiert sein kann, oder Morpholino ist.

6. Verfahren gemäss einem der Ansprüche 1 bis 5, dadurch gekennzeichnet, dass man eine Dioxazinverbindung der Formel,

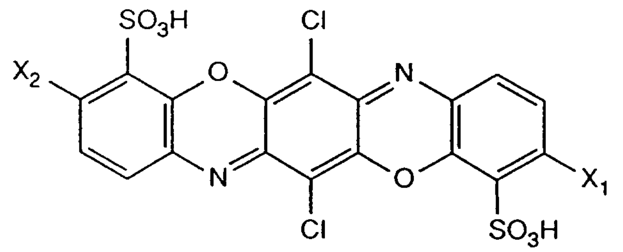

(6),

herstellt, worin $X_1$ und $X_2$ die in einem der Ansprüche 1 bis 5 angegebenen Bedeutungen haben.

7. Verfahren gemäss einem der Ansprüche 1, 2 und 3, dadurch gekennzeichnet, dass man eine Dioxazinverbindung der Formel

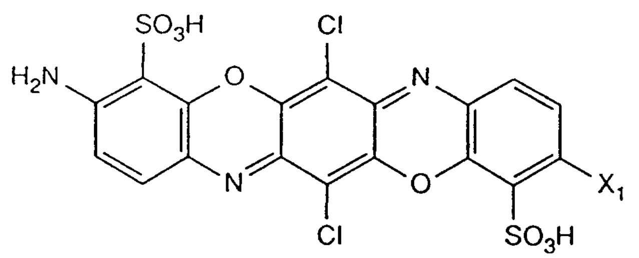

(6a),

herstellt, worin $X_1$ ein Rest der Formel

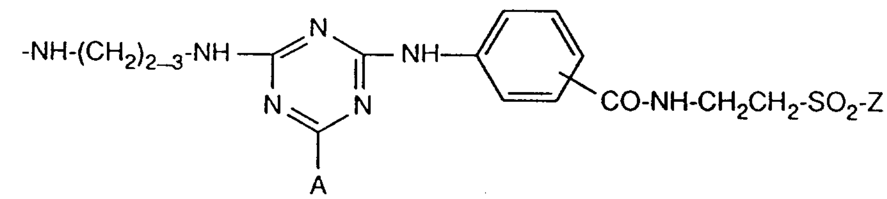

(7),

A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

8. Verfahren gemäss einem der Ansprüche 1 und 4, dadurchgekennzeichnet, dass man eine Dioxazinverbindung der Formel

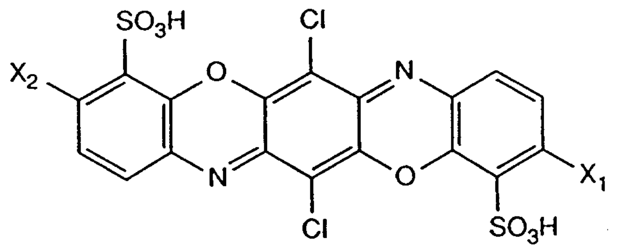

(9),

herstellt, worin $X_1$ und $X_2$ je ein Rest der Formel

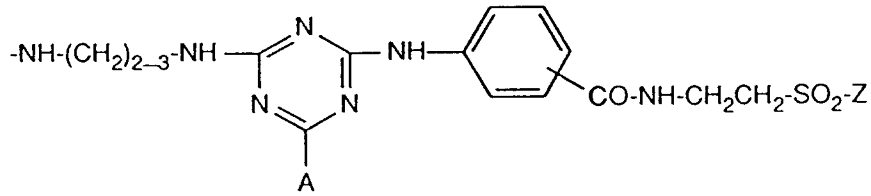

(7),

A $-NH_2$, $C_1$-$C_4$-Alkylamino, das durch $C_1$-$C_4$-Alkoxy, Hydroxy, Sulfo oder Sulfato substituiert sein kann, N,N-Di-$C_1$-$C_4$-alkylamino, das durch Hydroxy substituiert sein kann, Phenylamino, das durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, N-$C_1$-$C_4$-Alkyl-N-phenylamino, das im Alkylrest durch Halogen, Cyan, Hydroxy, Carboxy, Sulfo oder Sulfato und im Phenylrest durch $C_1$-$C_4$-Alkyl, $C_1$-$C_4$-Alkoxy, Halogen, Hydroxy, Ureido, Acetylamino, Carboxy, Sulfo oder Sulfomethyl substituiert sein kann, Sulfonaphthylamino oder Morpholino ist.

**9.** Verfahren gemäss Anspruch 5 dadurch gekennzeichnet, dass man eine Dioxazinverbindung der Formel

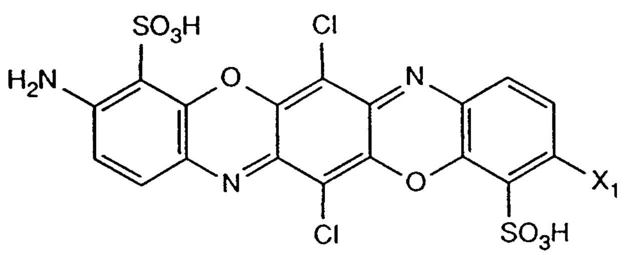

(6a) oder

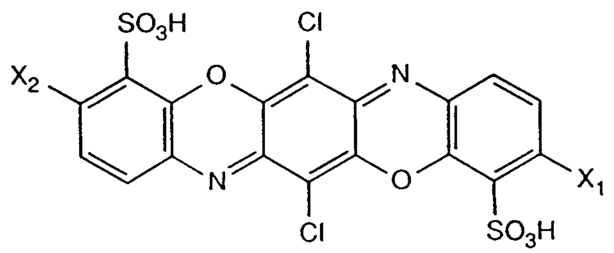

(9),

herstellt, worin $X_1$ bzw. $X_1$ und $X_2$ je ein Rest der Formel

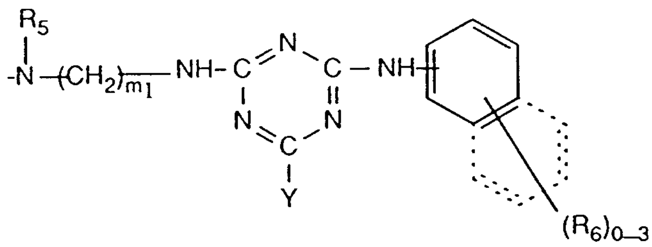

(3aa)

worin $m_1$ = 2, 3, 4, 5 oder 6 und $R_5$ Wasserstoff, Methyl, Aethyl oder Hydroxyäthyl ist, $R_6$ Methyl, Aethyl, Methoxy, Aethoxy, Chlor, Carboxy oder Sulfo ist und Y ein Rest

$$-NH-(CH_2)_{m_2}-SO_2-Z$$

$$-NH-(CH_2)_2-O-(CH_2)_2-SO_2-Z$$ oder

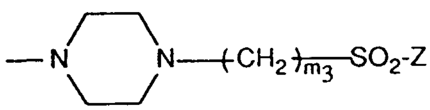

worin $m_2$ und $m_3$ = 2, 3, 4, 5 oder 6, insbesondere 2 oder 3 ist und Z Vinyl, β-Chloräthyl oder β-Sulfatoäthyl ist.

**10.** Verfahren gemäss Anspruch 9, dadurch gekennzeichnet, dass man eine Dioxazinverbindung der Formel (1) herstellt, worin $X_1$ bzw. $X_1$ und $X_2$ je ein Rest der Formel

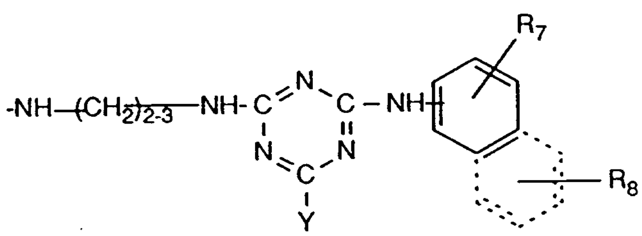

(3ab)

ist, worin $R_7$ und $R_8$ Sulfo ist, oder $R_7$ Wasserstoff und $R_8$ Sulfo ist, oder $R_7$ Sulfo und $R_8$ Wasserstoff ist, und Y ein Rest

$$-NH-(CH_2)_{2-3}-SO_2-Z$$

$$-NH-(CH_2)_2-O-(CH_2)_2-SO_2-Z$$ oder

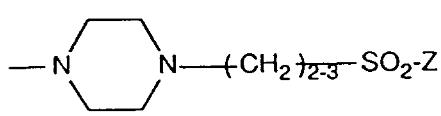

ist, und Z die in Anspruch 9 angegebene Bedeutung hat.

**11.** Verfahren zur Herstellung der Reaktivfarbstoffe gemäss Anspruch 1, dadurch gekennzeichnet, dass man ein Äquivalent 2,4,6-Trihalogen-s-triazin mit einem Äquivalent eines Amins der Formel,

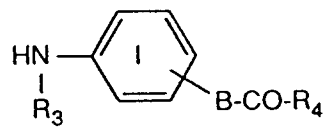

(18),

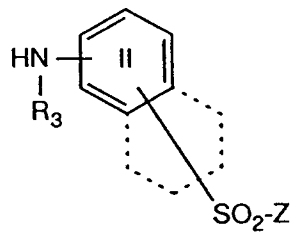

(19) oder

H-Y (20)

und mit einem Äquivalent eines Amins der Formel H-A bzw. $H-A_1$
und mit einem Äquivalent eines Amins der Formel

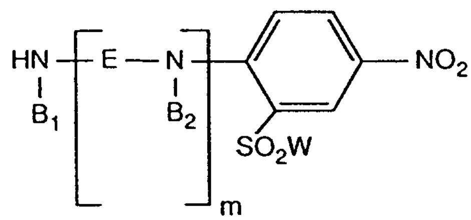

(25)

in beliebiger Reihenfolge nacheinander umsetzt, die erhaltene Nitroverbindung zum Amin reduziert, mit einem halben Äquivalent Chloranil umsetzt und den Ringschluss zur Dioxazinverbindung der Formel (1) durchfuhrt;
wobei A, $A_1$, B, $B_1$, $B_2$, E, m, $R_3$, $R_4$, W, Y, Z, I und II die unter den Formeln (2), (3) und (3a) angegebene Bedeutungen haben.

**12.** Verwendung der Reaktivfarbstoffe gemäss Anspruch 1 zum Färben und Bedrucken von cellulosehaltigen Fasermaterialien.

**13.** Verwendung gemäss Anspruch 12 zum Färben und Bedrucken von Baumwolle.

**Claims**
**Claims for the following Contracting States: BE, CH, DE, FR, GB, IT, LI**

**1.** A reactive dye of the formula

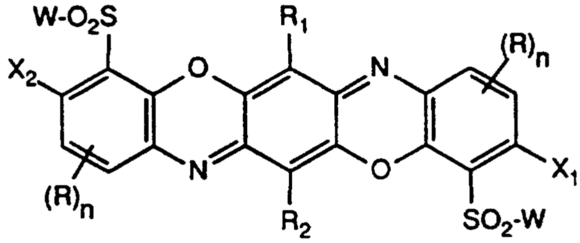

(1),

in which $R_1$ and $R_2$ are hydrogen, chlorine, bromine, $C_1$-$C_4$alkyl, $C_1$-$C_4$alkoxy or substituted or

unsubstituted phenyl or substituted or unsubstituted phenoxy, $(R)_n$ denotes n substituents R, which, independently of one another, may be $C_1$-$C_4$alkyl, $C_1$-$C_4$alkoxy, halogen, sulfo, carboxyl, carbamoyl, N-$C_1$-$C_4$alkylcarbamoyl,
N,N-di-$C_1$-$C_4$alkylcarbamoyl, $C_1$-$C_4$alkylsulfonyl, sulfamoyl, N-$C_1$-$C_4$alkylsulfamoyl or N,N-di-$C_1$-$C_4$alkylsulfamoyl,
W is hydroxyl or $C_1$-$C_6$alkyl, which may be substituted by hydroxyl, carboxyl, sulfo, sulfato, chlorine, $C_1$-$C_4$alkoxy, carbamoyl, sulfamoyl or a radical

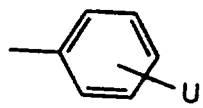 or

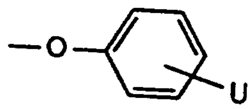

in which U is sulfo, sulfato, hydroxyl or carboxyl,
n is 0, 1 or 2,
$X_1$ is a radical of the formula

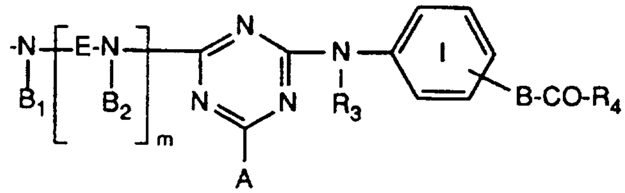 (2),

in which $B_1$ and $B_2$, independently of one another, are hydrogen or substituted or unsubstituted $C_1$-$C_4$alkyl,
E is $C_2$-$C_4$alkylene, which may be substituted by halogen, hydroxyl, carboxyl, sulfo, phenyl, sulfophenyl or $C_1$-$C_4$alkoxycarbonyl, or is cyclohexylene, which may be substituted by $C_1$-$C_4$alkyl,
or in which the group -N($B_1$)-E-N($B_2$)- is 1,4-piperazinediyl,
m is 0 or 1,
A is the radical of an amine,
$R_3$ is hydrogen or substituted or unsubstituted $C_1$-$C_4$alkyl,
B is a direct bond or a radical

$$-(CH_2)_{n'}- \quad \text{or} \quad -O-(CH_2)_{n'}-,$$

n' is 1, 2, 3, 4, 5 or 6,
$R_4$ is a radical of the formula

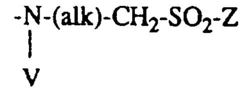 (2a)

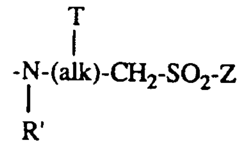 (2b)

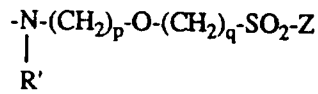 (2c)

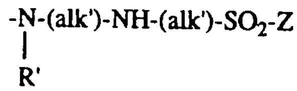 (2d)

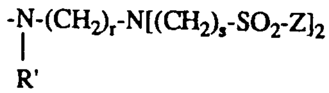 (2e) or

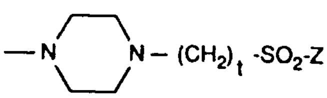 (2f),

in which R' is hydrogen or $C_1$-$C_6$alkyl,
alk is an alkylene radical having 1 to 7 carbon atoms,
T is hydrogen, halogen, hydroxyl, sulfato, carboxyl, cyano, $C_1$-$C_4$alkanoyloxy, $C_1$-$C_4$alkoxycarbonyl, carbamoyl or a radical $-SO_2-Z$, V is hydrogen, substituted or unsubstituted $C_1$-$C_4$alkyl or a radical of the formula

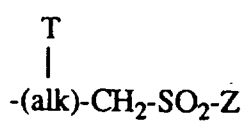 (2g),

in which (alk) is as defined above,
alk', independently of one another, are polymethylene radicals having 2 to 6 C atoms,
Z is β-sulfatoethyl, β-thiosulfatoethyl, β-phosphatoethyl, β-acyloxyethyl, β-halogenoethyl or vinyl,
p, q, r and t, independently of one another, are each the number 1, 2, 3, 4, 5 or 6,
s is the number 2, 3, 4, 5 or 6 and $X_2$ is a group $-NH_2$,
or in which $X_1$ is a radical of the formula

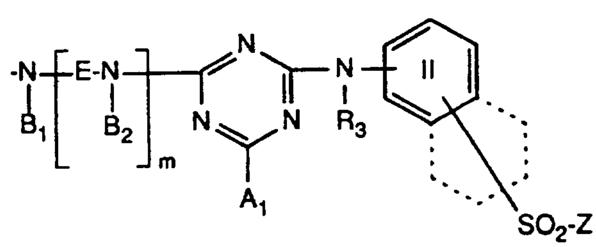 (3),

in which $A_1$ is one of the radicals of the formulae (2a) to (2f) or a radical of the formula

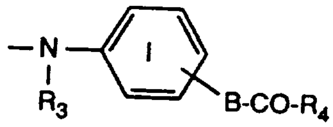

(4)

or

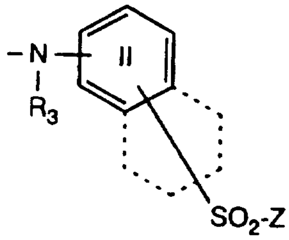

(5)

in which $B_1$, $B_2$, E, m, $R_3$, $R_4$ and Z are as defined, and benzene ring I and benzene or naphthalene ring II can contain further substituents, and $X_2$ is a group $-NH_2$;
or in which $X_1$ is a radical of the formula (2) and $X_2$, independently of $X_1$, is also a radical of the formula (2);
or in which $X_1$ is a radical of the formula

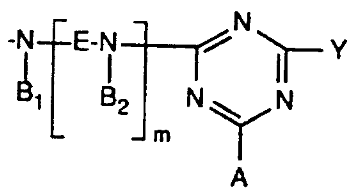

(3a),

in which Y is one of the radicals of the formulae (2a) to (2f), $B_1$, $B_2$, E, A and m are as defined, and $X_2$ is a group $-NH_2$ or also a radical of the formula (3a), with the proviso that the radical A in the formulae (2) and (3a) is free from fibre-reactive groups.

**2.** A reactive dye according to claim 1, in which $X_1$ is a radical of the formula (2) or (3), and $A_1$ is a radical of the formula

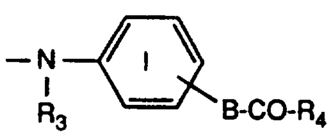

(4)

or

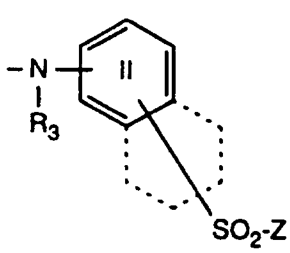

(5)

in which $R_3$, B, $R_4$ and Z are as defined in claim 1, the radicals of the formulae (4) and (5) being independent of the analogous radicals in the formulae (2) and (3), and benzene ring I and benzene or naphthalene ring II may contain further substituents, and $X_2$ is the group $-NH_2$.

**3.** A reactive dye according to claim 1, in which $X_1$ is a radical of the formula (2), A is $-NH_2$,$C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-

$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino, and $X_2$ is the group -$NH_2$.

**4.** A reactive dye according to claim 1, in which $X_1$ and $X_2$, independently of one another, are each a radical of the formula (2), and A is -$NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino.

**5.** A reactive dye according to any one of claims 1 to 4, of the formula (1), in which $X_1$ is a radical of the formula (3a), $B_1$, $B_2$, E and Y are as defined in formula (3a) and A is -$NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, naphthylamino, in which the naphthalene ring can be substituted as mentioned for the phenyl ring, or is morpholino, and $X_2$ is the group -$NH_2$, or in which $X_1$ and $X_2$, independently of one another, are each a radical of the formula (2), and A is -$NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, naphthylamino, in which the naphthalene ring may be substituted as mentioned for the phenyl ring, or is morpholino.

**6.** A reactive dye according to any one of claims 1 to 5, of the formula

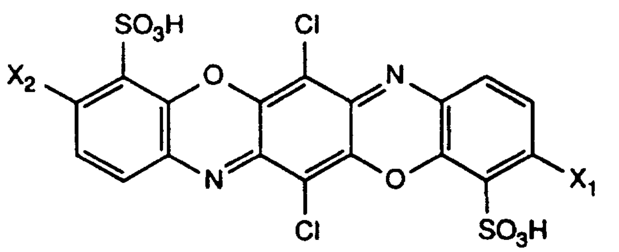

(6)

in which $X_1$ and $X_2$ are as defined in any one of claims 1 to 5.

**7.** A reactive dye according to any one of claims 1, 2 and 3, of the formula

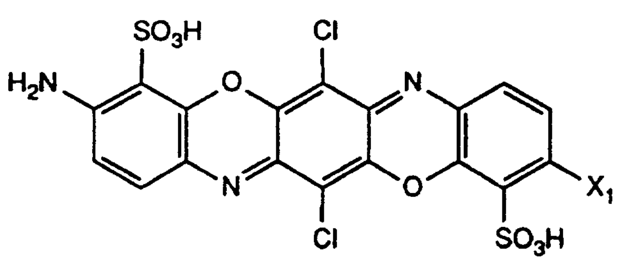

(6a),

in which $X_1$ is a radical of the formula

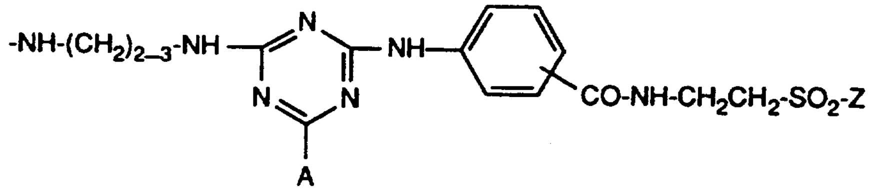

(7),

A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino.

**8.** A reactive dye according to any one of claims 1 and 4, of the formula

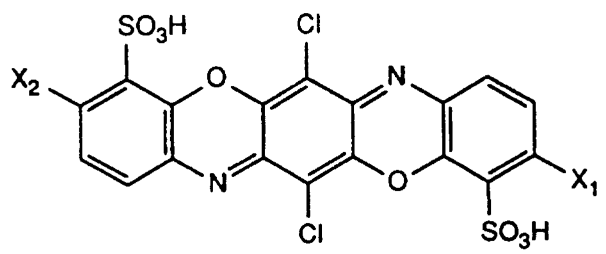

(9),

in which $X_1$ and $X_2$ are each a radical of the formula

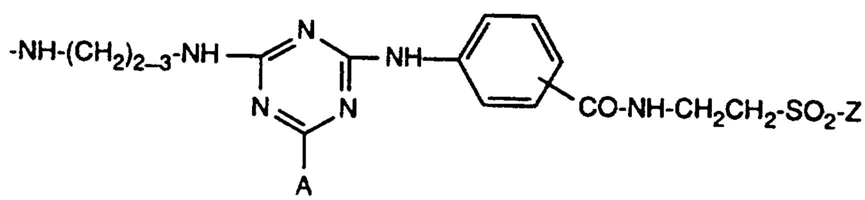

(7),

A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino.

**9.** a reactive dye according to claim 5, of the formula

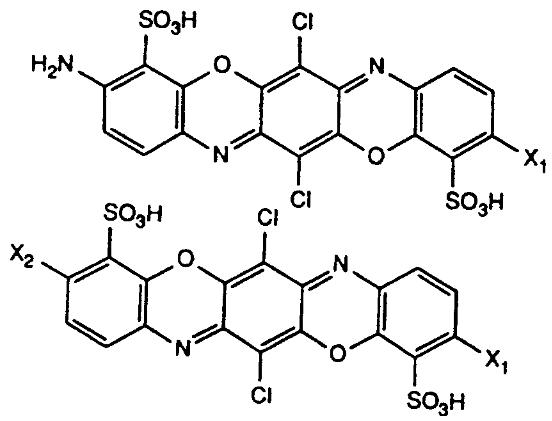

(6a), or (9),

in which $X_1$ or $X_1$ and $X_2$ are each a radical of the formula

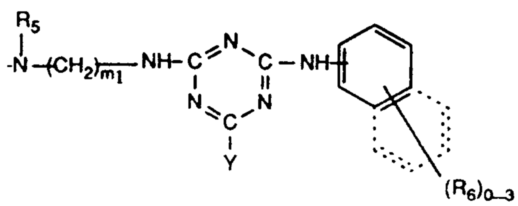

(3aa)

in which $m_1$ is 2, 3, 4, 5 or 6 and $R_5$ is hydrogen, methyl, ethyl or hydroxyethyl, $R_6$ is methyl, ethyl, methoxy, ethoxy, chlorine, carboxyl or sulfo and Y is a radical

$$-NH-(CH_2)_{m_2}-SO_2-Z$$

$$-NH-(CH_2)_2-O-(CH_2)_2-SO_2-Z$$

or

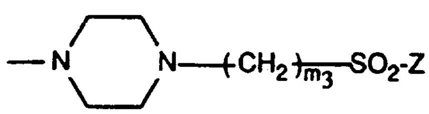

in which $m_2$ and $m_3$ are 2, 3, 4, 5 or 6, in particular 2 or 3, and Z is vinyl, β-chloroethyl or β-sulfatoethyl.

**10.** A reactive dye according to claim 9, in which $X_1$ or $X_1$ and $X_2$ are each a radical of the formula

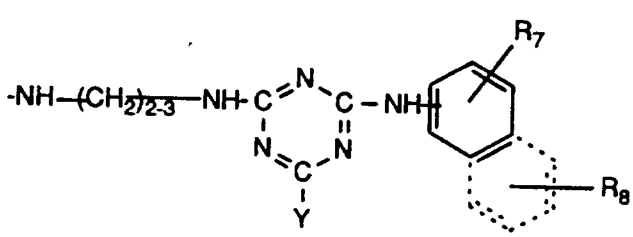

(3ab)

in which $R_7$ and $R_8$ are sulfo or $R_7$ is hydrogen and $R_8$ is sulfo, or $R_7$ is sulfo and $R_8$ is hydrogen, and Y is a radical

$-NH-(CH_2)_{2\text{-}3}-SO_2-Z$

$-NH-(CH_2)_2-O-(CH_2)_2-SO_2-Z$

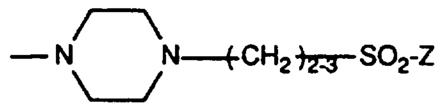 or

and Z is as defined in claim 9.

**11.** A process for the preparation of a reactive dye according to claim 1, characterized in that a dioxazine compound of the formula

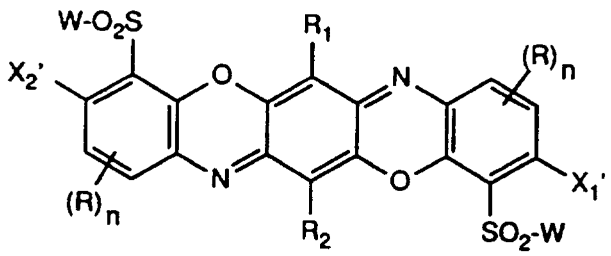

(16),

in which R, $R_1$, $R_2$, W and n are as defined in formula (1) and $X_1'$ is a radical of the formula

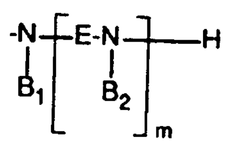

(17),

in which $B_1$, $B_2$, E and m are as defined in formula (2), $X_2'$ is $-NH_2$ or a radical of the formula (17), is condensed with a compound of the formula

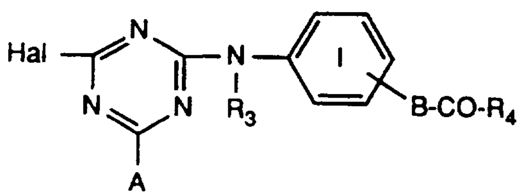

(21),

in which Hal is halogen, and A, $R_3$, $R_4$ and I are as defined in formula (2), or with a compound of the formula

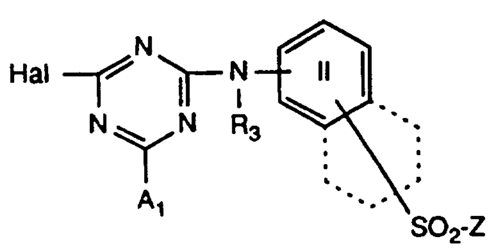

(22),

in which Hal is halogen and $A_1$, $R_3$, Z and II are as defined in formula (3), or with a compound of the

formula

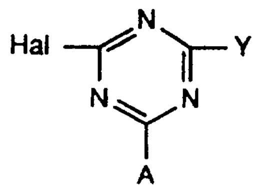

(23),

in which Hal is halogen and A and Y are as defined in formula (3a).

**12.** A process for the preparation of a reactive dye according to claim 1, characterized in that one equivalent of 2,4,6-trihalogeno-s-triazine is reacted with one equivalent of an amine of the formula

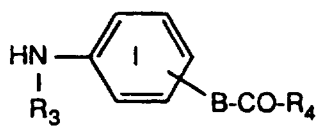

(18),

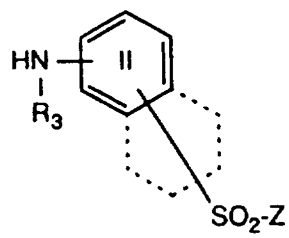

(19) or

H-Y (20)

and with one equivalent of an amine of the formula H-A or H-$A_1$ and with one equivalent of an amine of the formula

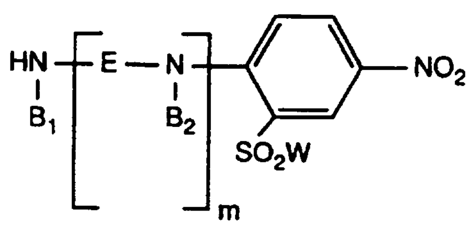

(25)

successively in any desired order, the nitro compound obtained is reduced to the amine, the amine is reacted with half an equivalent of chloranil and the ring is closed to give the dioxazine compound of the formula (I), in which A, $A_1$, B, $B_1$, $B_2$, E, m, $R_3$, $R_4$, W, Y, Z, I and II are as defined in formulae (2), (3) and (3a).

**13.** Use of a reactive dye according to claim 1 for dyeing and printing cellulose-containing fibre materials.

**14.** Use according to claim 13 for dyeing and printing cotton.

**Claims for the following Contracting State : ES**

1. A process for the preparation of a reactive dye of the formula

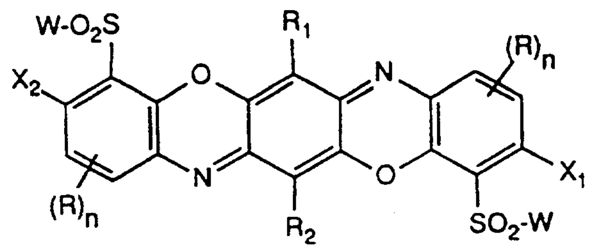

(1),

in which $R_1$ and $R_2$ are hydrogen, chlorine, bromine, $C_1$-$C_4$alkyl, $C_1$-$C_4$alkoxy or substituted or unsubstituted phenyl or substituted or unsubstituted phenoxy, $(R)_n$ denotes n substituents R, which, independently of one another, may be $C_1$-$C_4$alkyl, $C_1$-$C_4$alkoxy, halogen, sulfo, carboxyl, carbamoyl, N-$C_1$-$C_4$alkylcarbamoyl,
N,N-di-$C_1$-$C_4$alkylcarbamoyl, $C_1$-$C_4$alkylsulfonyl, sulfamoyl,
N-$C_1$-$C_4$alkylsulfamoyl or N,N-di-$C_1$-$C_4$alkylsulfamoyl,
W is hydroxyl or $C_1$-$C_6$alkyl, which may be substituted by hydroxyl, carboxyl, sulfo, sulfato, chlorine, $C_1$-$C_4$alkoxy, carbamoyl, sulfamoyl or a radical

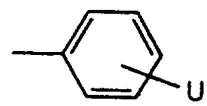

or

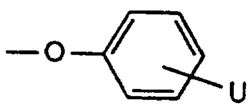

in which U is sulfo, sulfato, hydroxyl or carboxyl,
n is 0, 1 or 2,
$X_1$ is a radical of the formula

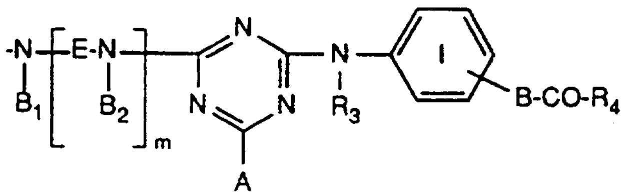

(2),

in which $B_1$ and $B_2$, independently of one another, are hydrogen or substituted or unsubstituted $C_1$-$C_4$alkyl,
E is $C_2$-$C_4$alkylene, which may be substituted by halogen, hydroxyl, carboxyl, sulfo, phenyl, sulfophenyl or $C_1$-$C_4$alkoxycarbonyl, or is cyclohexylene, which may be substituted by $C_1$-$C_4$alkyl,
or in which the group -N($B_1$)-E-N($B_2$)- is 1,4-piperazinediyl,
m is 0 or 1,
A is the radical of an amine,
$R_3$ is hydrogen or substituted or unsubstituted $C_1$-$C_4$alkyl, B is a direct bond or a radical

$$-(CH_2)_{n'}- \text{ or } -O-(CH_2)_{n'}- ,$$

n' is 1, 2, 3, 4, 5 or 6,

$R_4$ is a radical of the formula

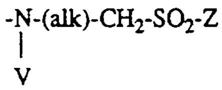

(2a)

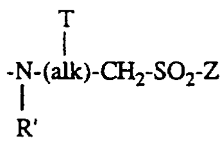

(2b)

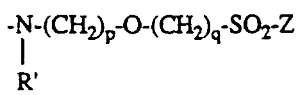

(2c)

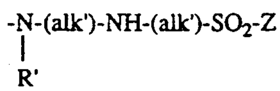

(2d)

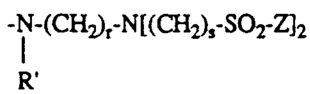

(2e) or

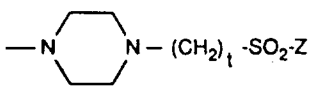

(2f),

in which R' is hydrogen or $C_1$-$C_6$alkyl,
alk is an alkylene radical having 1 to 7 carbon atoms,
T is hydrogen, halogen, hydroxyl, sulfato, carboxyl, cyano,
$C_1$-$C_4$alkanoyloxy, $C_1$-$C_4$alkoxycarbonyl, carbamoyl or a radical $-SO_2-Z$, V is hydrogen, substituted or unsubstituted $C_1$-$C_4$alkyl or a radical of the formula

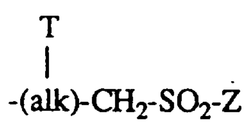

(2g),

in which (alk) is as defined above,
alk', independently of one another, are polymethylene radicals having 2 to 6 C atoms,
Z is $\beta$-sulfatoethyl, $\beta$-thiosulfatoethyl, $\beta$-phosphatoethyl,
$\beta$-acyloxyethyl, $\beta$-halogenoethyl or vinyl,
p, q, r and t, independently of one another, are each the number 1, 2,
3, 4, 5 or 6,
s is the number 2, 3, 4, 5 or 6 and $X_2$ is a group $-NH_2$;
or in which $X_1$ is a radical of the formula

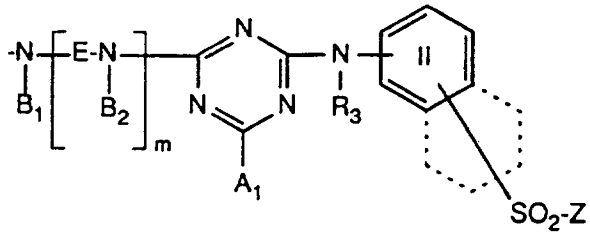

(3),

in which $A_1$ is one of the radicals of the formulae (2a) to (2f) or a radical of the formula

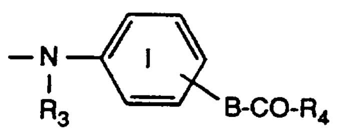

(4)

or

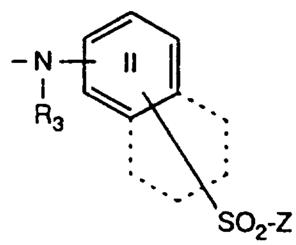

(5)

in which $B_1$, $B_2$, E, m, $R_3$, $R_4$ and Z are as defined, and benzene ring I and benzene or naphthalene ring II can contain further substituents, and $X_2$ is a group $-NH_2$;
or in which $X_1$ is a radical of the formula (2) and $X_2$, independently of $X_1$, is also a radical of the formula (2);
or in which $X_1$ is a radical of the formula

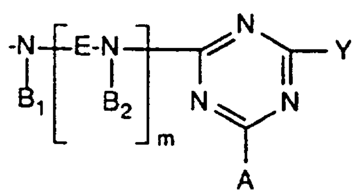

(3a),

in which Y is one of the radicals of the formulae (2a) to (2f), $B_1$, $B_2$, E, A and m are as defined, and $X_2$ is a group $-NH_2$ or also a radical of the formula (3a), with the proviso that the radical A in the formulae (2) and (3a) is free from fibre-reactive groups, characterized in that a dioxazine compound of the formula

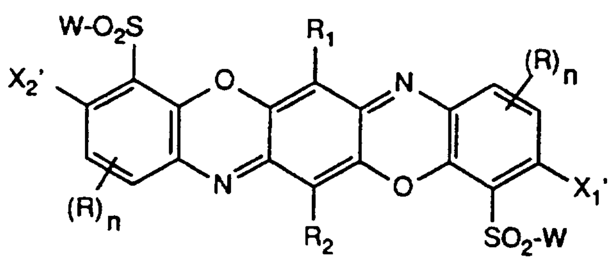

(16),

in which R, $R_1$, $R_2$, W and n are as defined in formula (1) and $X_1$' is a radical of the formula

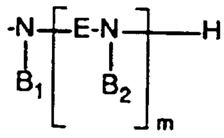

(17),

in which $B_1$, $B_2$, E and m are as defined in formula (2), $X_2'$ is $-NH_2$ or a radical of the formula (17), is condensed with a compound of the formula

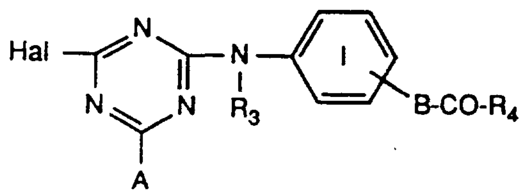

(21),

in which Hal is halogen, and A, $R_3$, $R_4$ and I are as defined in formula (2), or with a compound of the formula

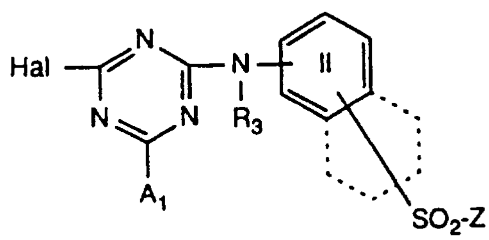

(22),

in which Hal is halogen and $A_1$, $R_3$, Z and II are as defined in formula (3), or with a compound of the formula

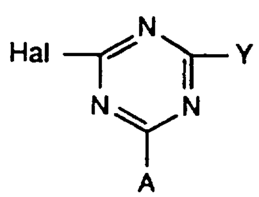

(23),

in which Hal is halogen and A and Y are as defined in formula (3a).

**2.** A process according to claim 1, characterized in that a dioxazine compound is prepared of the formula (1) in which $X_1$ is a radical of the formula (2) or (3), and $A_1$ is a radical of the formula

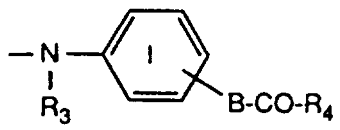 (4)

or

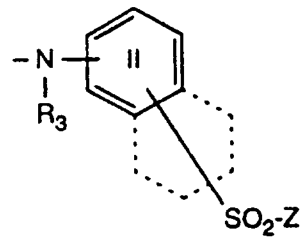 (5)

in which $R_3$, B, $R_4$ and Z are as defined in claim 1, the radicals of the formulae (4) and (5) being independent of the analogous radicals in the formulae (2) and (3), and benzene ring I and benzene or naphthalene ring II may contain further substituents, and $X_2$ is the group $-NH_2$-.

3. A process according to claim 1, characterized in that a dioxazine compound is prepared in which $X_1$ is a radical of the formula (2), A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino, and $X_2$ is the group $-NH_2$.

4. A process according to claim 1, characterized in that a dioxazine compound is prepared of the formula (1) in which $X_1$, and $X_2$, independently of one another, are each a radical of the formula (2), and A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which my be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino.

5. A process according to any one of claims 1 to 4, characterized in that a dioxazine compound is prepared of the formula (1) in which $X_1$ is a radical of the formula (3a), $B_1$, $B_2$, E and Y are as defined in formula (3a) and A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, naphthylamino, in which the naphthalene ring can be substituted as mentioned for the phenyl ring, or is morpholino, and $X_2$ is the group $-NH_2$, or in which $X_1$ and $X_2$, independently of one another, are each a radical of the formula (2), and A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, naphthylamino, in which the naphthalene ring may be substituted as mentioned for the phenyl ring, or is morpholino.

6. A process according to any one of claims 1 to 5, characterized in that a dioxazine compound is prepared of the formula

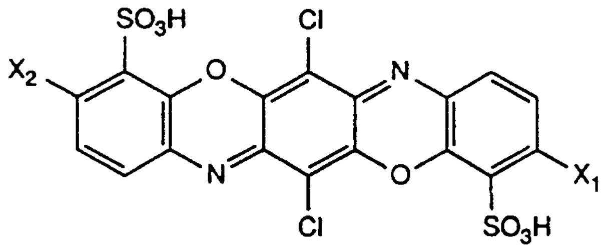

(6)

in which $X_1$ and $X_2$ are as defined in any one of claims 1 to 5.

**7.** A process according to any one of claims 1, 2 and 3, characterized in that a dioxazine compound is prepared of the formula

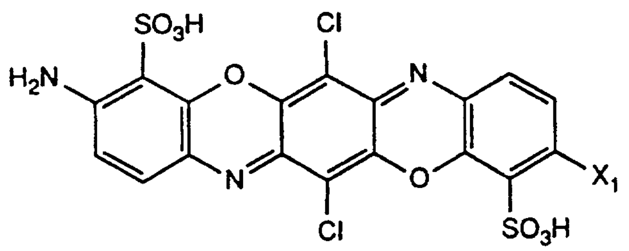

(6a),

in which $X_1$ is a radical of the formula

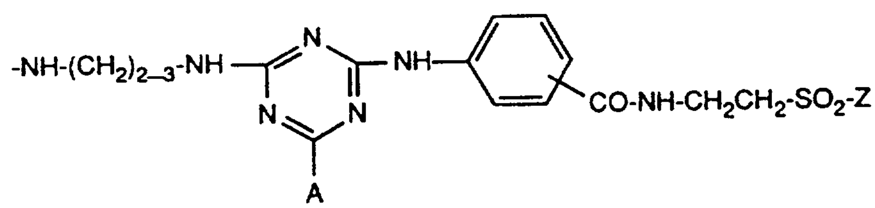

(7),

A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino.

**8.** A process according to any one of claims 1 and 4, characterized in that a dioxazine compound is prepared of the formula

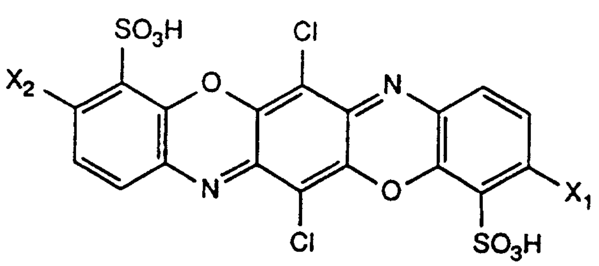

(9),

in which $X_1$ and $X_2$ are each a radical of the formula

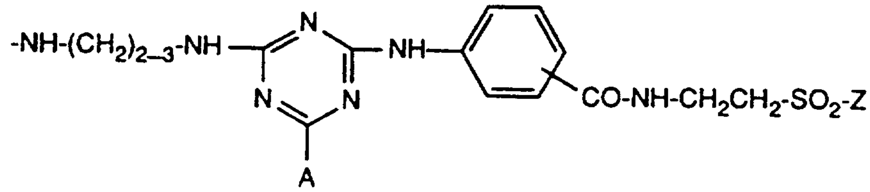

(7),

A is $-NH_2$, $C_1$-$C_4$alkylamino, which may be substituted by $C_1$-$C_4$alkoxy, hydroxyl, sulfo or sulfato, N,N-di-$C_1$-$C_4$alkylamino, which may be substituted by hydroxyl, phenylamino, which may be substituted by $C_1$-$C_4$alkyl, $C_1$-$C_4$alkoxy, halogen, hydroxyl, ureido, acetylamino, carboxyl, sulfo or sulfomethyl, N-$C_1$-$C_4$alkyl-N-phenylamino, which may be substituted in the alkyl radical by halogen, cyano, hydroxyl, carboxyl, sulfo or sulfato and in the phenyl radical by $C_1$-$C_4$alkyl, $C_1$-$C_4$alkoxy, halogen, hydroxyl, ureido, acetylamino, carboxyl, sulfo or sulfomethyl, or is sulfonaphthylamino or morpholino.

**9.** A process according to claim 5, characterized in that a dioxazine compound is prepared of the formula

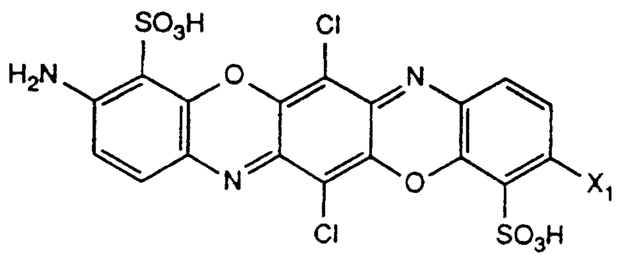

(6a),

or

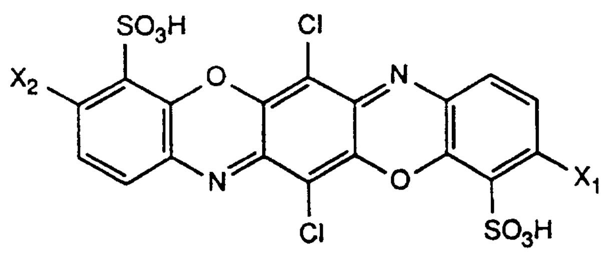

(9),

in which $X_1$ or $X_1$, and $X_2$ are each a radical of the formula

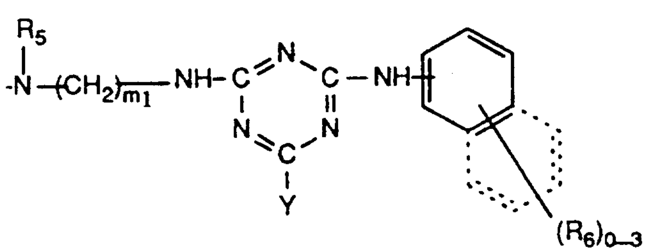

(3aa)

in which $m_1$ is 2, 3, 4, 5 or 6 and $R_5$ is hydrogen, methyl, ethyl or hydroxyethyl, $R_6$ is methyl, ethyl, methoxy, ethoxy, chlorine, carboxyl or sulfo and Y is a radical

$-NH-(CH_2)_{m_2}-SO_2-Z$

$-NH-(CH_2)_2-O-(CH_2)_2-SO_2-Z$ or

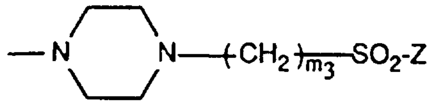

in which $m_2$ and $m_3$ are 2, 3, 4, 5 or 6, in particular 2 or 3, and Z is vinyl, $\beta$-chloroethyl or $\beta$-sulfatoethyl.

**10.** A process according to claim 9, characterized in that a dioazine compound is prepared of the formula (1) in which $X_1$ or $X_1$ and $X_2$ are each a radical of the formula

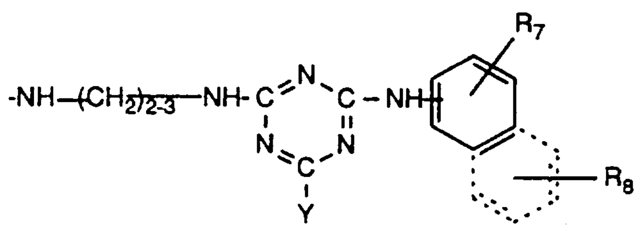

(3ab)

in which $R_7$ and $R_8$ are sulfo or $R_7$ is hydrogen and $R_8$ is sulfo, or $R_7$ is sulfo and $R_8$ is hydrogen, and Y is a radical

$-NH-(CH_2)_{2-3}-SO_2-Z$

$-NH-(CH_2)_2-O-(CH_2)_2-SO_2-Z$ or

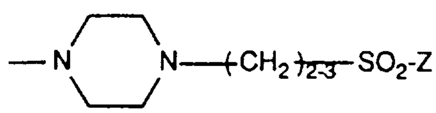

and Z is as defined in claim 9.

**11.** A process for the preparation of a reactive dye according to claim 1, characterized in that one equivalent of 2,4,6-trihalogeno-s-triazine is reacted with one equivalent of an amine of the formula

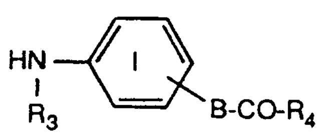

(18),

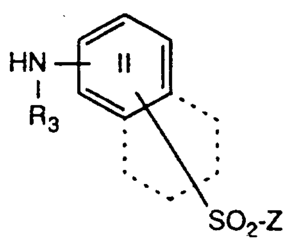

(19) or

H-Y (20)

and with one equivalent of an amine of the formula H-A or H-$A_1$ and with one equivalent of an amine of the formula

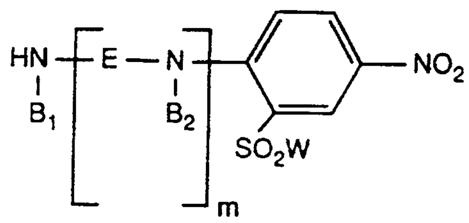 (25)

successively in any desired order, the nitro compound obtained is reduced to the amine, the amine is reacted with half an equivalent of chloranil and the ring is closed to give the dioxazine compound of the formula (I), in which A, $A_1$, B, $B_1$, $B_2$, E, m, $R_3$, $R_4$, W, Y, Z, I and II are as defined in formulae (2), (3) and (3a).

**12.** Use of a reactive dye according to claim 1 for dyeing and printing cellulose-containing fibre materials.

**13.** Use according to claim 12 for dyeing and printing cotton.

**Revendications**

**Revendications pour les Etats contractants suivants : BE, CH, DE, FR, GB, IT, LI**

**1.** Colorants réactifs de formule

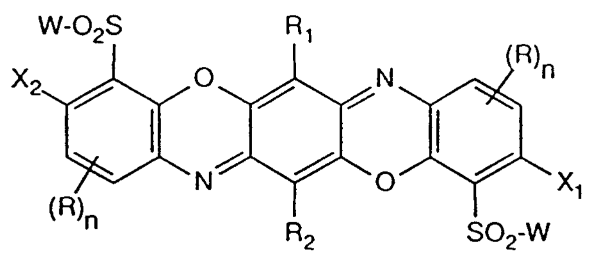 (1),

dans laquelle $R_1$ et $R_2$ représentent un atome d'hydrogène, de chlore ou de brome, ou un groupe alkyle en $C_1$-$C_4$, alcoxy en $C_1$-$C_4$ ou un groupe phényle éventuellement substitué, ou un groupe phénoxy éventuellement substitué, $(R)_n$ représente n substituants R qui peuvent être, indépendamment les uns des autres, un atome d'halogène ou un groupe alkyle en $C_1$-$C_4$, alcoxy en $C_1$-$C_4$, sulfo, carboxy, carbamoyle, N-alkyl($C_1$-$C_4$)carbamoyle, N,N-dialkyl($C_1$-$C_4$)carbamoyle, alkyl($C_1$-$C_4$)sulfonyle, sulfamoyle, N-alkyl($C_1$-$C_4$)sulfamoyle ou N,N-dialkyl($C_1$-$C_4$)sulfamoyle; W représente le groupe hydroxy ou un groupe alkyle en $C_1$-$C_6$ qui peut être substitué par l'atome de chlore ou par des radicaux hydroxy, carboxy, sulfo, sulfato, alcoxy en $C_1$-$C_4$,carbamoyle, sulfamoyle ou par un radical

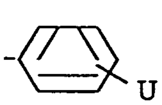 ou 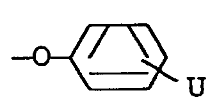

dans lequel U est le groupe sulfo, sulfato, hydroxy ou carboxy;
n = 0, 1 ou 2;
$X_1$ est un radical de formule

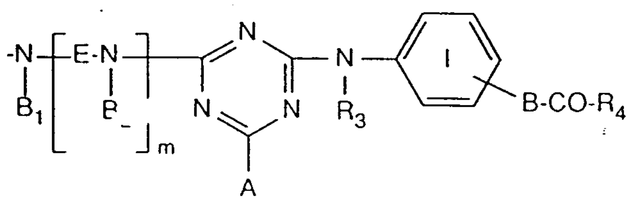

(2),

dans laquelle $B_1$ et $B_2$ représentent, indépendamment l'un de l'autre, un atome d'hydrogène ou un radical alkyle en $C_1$-$C_4$ éventuellement substitué;
E est un radical alkylène en $C_2$-$C_4$ qui peut être substitué par des substituants halogène, hydroxy, carboxy, sulfo, phényle, sulfophényle ou alcoxy($C_1$-$C_4$)carbonyle, ou un radical cyclohexylène qui peut être substitué par un groupe alkyle en $C_1$-$C_4$;
ou dans laquelle le groupe -N($B_1$)-E-N($B_2$)- est le groupe 1,4-pipérazinediyle;
m = 0 ou 1;
A représente le reste d'une amine;
$R_3$ représente un atome d'hydrogène ou un groupe alkyle en $C_1$-$C_4$ éventuellement substitué;
B représente la liaison directe ou un radical

$$-(CH_2)_{n'}- \quad \text{ou} \quad -O-(CH_2)_{n'}-;$$

n' = 1, 2, 3, 4, 5 ou 6;
$R_4$ représente un radical de formule

$$-N(V)-(alk)-CH_2-SO_2-Z \qquad (2a)$$

$$-N(R')-(alk(T))-CH_2-SO_2-Z \qquad (2b)$$

$$-N(R')-(CH_2)_p-O-(CH_2)_q-SO_2-Z \qquad (2c)$$

$$-N(R')-(alk')-NH-(alk')-SO_2-Z \qquad (2d)$$

$$-N(R')-(CH_2)_r-N[(CH_2)_s-SO_2-Z]_2 \qquad (2e) \text{ ou}$$

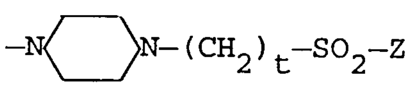

(2f),

formules dans lesquelles R' est un atome d'hydrogène ou un groupe alkyle en $C_1$-$C_6$,
alk représente un radical alkylène ayant de 1 à 7 atomes de carbone,
t représente un atome d'hydrogène ou d'halogène ou un groupe hydroxy, sulfato, carboxy, cyano, alcanoyloxy en $C_1$-$C_4$, alcoxy($C_1$-$C_4$)carbonyle, carbamoyle ou un radical $-SO_2-Z$, V représente un atome d'hydrogène ou un groupe alkyle en $C_1$-$C_4$ éventuellement substitué ou un radical de formule

$$-(alk(T))-CH_2-SO_2-Z \qquad (2g)$$

dans laquelle (alk) a la signification donnée précédemment; les radicaux alk', indépendamment l'un de l'autre, représentent des radicaux polyméthylène ayant de 2 à 6 atomes de carbone;
Z représente un groupe β-sulfatoéthyle, β-thiosulfatoéthyle, β-phosphatoéthyle, β-acyloxyéthyle, β-halogénoéthyle ou vinyle;
p, q, r et t représentent chacun, indépendamment les uns des autres, le nombre 1, 2, 3, 4, 5 ou 6;
s est le nombre 2, 3, 4, 5 ou 6, et
$X_2$ est le groupe $-NH_2$;
ou dans laquelle $X_1$ représente un radical de formule

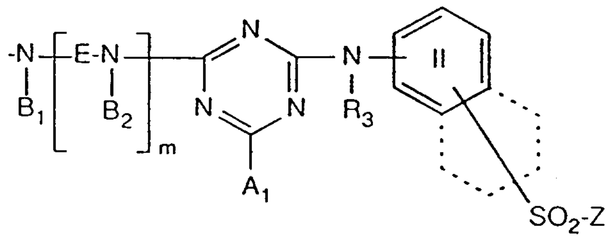

(3),

dans laquelle $A_1$ représente l'un des radicaux de formules (2a) à (2f), ou un radical de formule

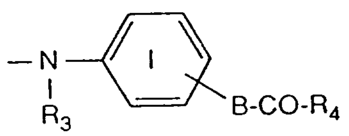

(4)

ou

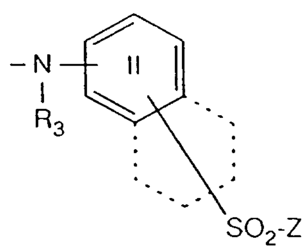

(5)

et $B_1$, $B_2$, E, m, $R_3$, $R_4$ et Z ont les significations indiquées, et le cycle benzénique I et le cycle benzénique ou naphtalénique II peuvent comporter d'autres substituants, et $X_2$ est le groupe $-NH_2$;
ou dans laquelle $X_1$ est un radical de formule (2) et $X_2$, indépendamment de $X_1$ est également un radical de formule (2);
ou dans laquelle $X_1$ est un radical de formule

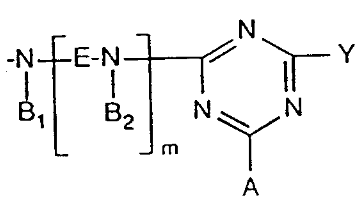

(3a),

dans laquelle Y représente l'un des radicaux de formule (2a) à (2f), $B_1$, $B_2$, E, A et m ont les significations indiquées, et $X_2$ est le groupe $-NH_2$ ou également un radical de formule (3a), étant entendu que le radical A dans les formules (2) et (3a) est exempt de groupes réactifs avec les fibres.

2. Colorants réactifs selon la revendication 1, dans lesquels $X_1$ est un radical de formule (2) ou (3), et $A_1$ est un radical de formule

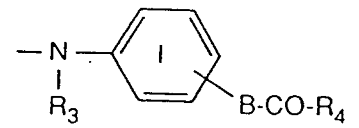

(4)

ou

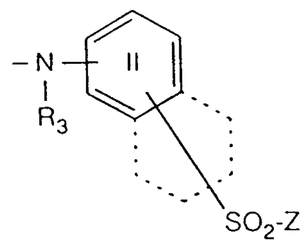

(5)

formules dans lesquelles $R_3$, B, $R_4$ et Z ont les significations indiquées dans la revendication 1, les radicaux de formules (4) et (5) étant indépendants des radicaux analogues dans les formules (2) et (3), et le cycle benzénique I et le cycle benzénique ou naphtalénique II pouvant comporter d'autres substituants, et $X_2$ est le groupe $NH_2$.

**3.** Colorants réactifs selon la revendication 1, dans lesquels $X_1$ est un radical de formule (2), A est le groupe $-NH_2$, un radical alkyl($C_1$-$C_4$)amino qui peut être substitué. par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut être substitué par des substituants halogène, alkyle en $C_1$-$C_4$, alcoxy en $C_1$-$C_4$, hydroxy, uréido, acétylamino, carboxy, sulfo ou sulfométhyle, un radical N-alkyl($C_1$-$C_4$)-N-phénylamino qui peut être substitué sur le fragment alkyle par des substituants halogène, cyano, hydroxy, carboxy, sulfo ou sulfato et sur le fragment phényle par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino, et $X_2$ le groupe $-NH_2$.

**4.** Colorants réactifs selon la revendication 1, dans lesquels $X_1$ et et $X_2$ représentent chacun, indépendamment l'un de l'autre, un radical de formule (2), et A est le groupe $-NH_2$, un radical alkyl($C_1$-$C_4$)-amino qui peut être substitué par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut être substitué par des substituants alkyle en $C_1$-$C_4$,alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par des substituants halogène, cyano, hydroxy, carboxy, sulfo ou sulfato et sur le fragment phényle par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino.

**5.** Colorants réactifs selon l'une des revendications 1 à 4, de formule (1) dans lesquels $X_1$ est un radical de formule (3a), $B_1$, $B_2$, E et Y ont les significations données à propos de la formule (3) et A est le groupe $-NH_2$, un radical alkyl($C_1$-$C_4$)amino qui peut être substitué par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par des substituants halogène, cyano, hydroxy, carboxy, sulfo ou sulfato ou sur le fragment phényle par des substituants alkyle en $C_1$-$C_4$, alcoxy en $C_1$-$C_4$, halogène, hydroxy, uréido, acétylamino, carboxy, sulfo ou sulfométhyle, un radical naphtylamino, le noyau naphtalène pouvant être substitué comme indiqué pour le cycle phényle, ou le radical morpholino, et $X_2$ est le groupe $-NH_2$, ou dans lesquels $X_1$ et $X_2$ représentent chacun, indépendamment l'un de l'autre, un radical de formule (2), et A est le groupe $-NH_2$, un radical alkyl($C_1$-$C_4$)amino qui peut être substitué par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut

être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par un atome d'halogène ou par le groupe cyano, hydroxy, carboxy, sulfo ou sulfato et, sur le fragment phényle, par des substituants alkyle en $C_1$-$C_4$, alcoxy en $C_1$-$C_4$, halogène, hydroxy, uréido, acétylamino, carboxy, sulfo ou sulfométhyle, un radical naphtylamino, le noyau naphtalénique pouvant être substitué comme indiqué pour le cycle phényle, ou le radical morpholino.

6. Colorants réactifs selon l'une des revendications 1 à 5, de formule

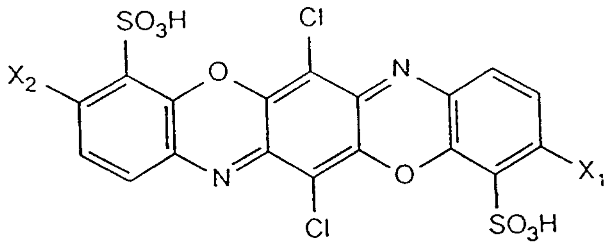

(6),

dans laquelle $X_1$ et $X_2$ ont les significations données dans l'une des revendications 1 à 5.

7. Colorants réactifs selon l'une des revendications 1, 2 et 3, de formule

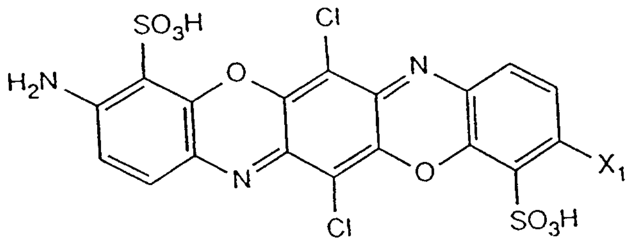

(6a),

dans laquelle $X_1$ représente un radical de formule

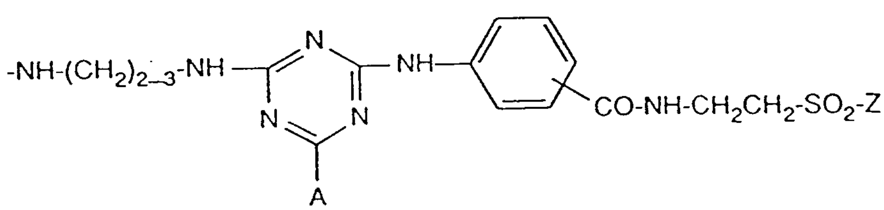

(7),

A est le groupe $-NH_2$, un radical alkyl($C_1$-$C_4$)amino qui peut être substitué par des substituants alcoxy en $C_1$-$C_4$, hydroxy, sulfato ou sulfo, un radical N,N-dialkyl($C_1$-$C_4$)-amino qui peut être substitué par le groupe hydroxy, un radical phénylamino qui peut être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par un atome d'halogène ou par le groupe cyano, hydroxy, carboxy, sulfo ou sulfato et, sur le fragment phényle, par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino.

**8.** Colorants réactifs selon l'une des revendications 1 et 4, de formule

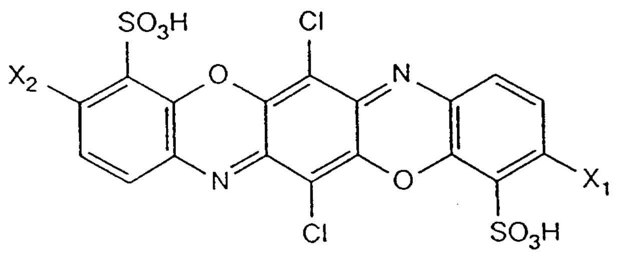

(9),

dans laquelle $X_1$ et $X_2$ représentent chacun un radical de formule

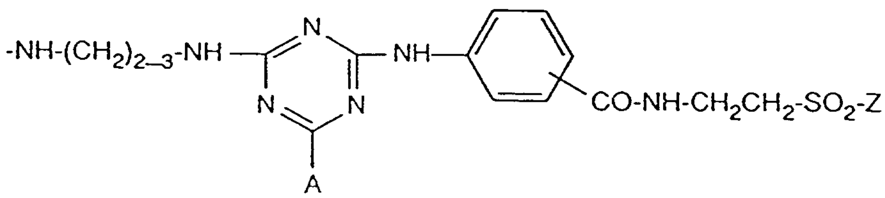

(7),

A représente le groupe $-NH_2$, un radical alkyl($C_1$-$C_4$)amino qui peut être substitué par des substituants alcoxy en $C_1$-$C_4$, hydroxy, sulfato ou sulfo, un radical N,N-dialkyl($C_1$-$C_4$)amino qui peut être substitué par le groupe hydroxy, un radical phénylamino qui peut être sulstitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par des atomes d'halogène ou par le groupe cyano, hydroxy, carboxy, sulfo ou sulfato et, sur le fragment phényle par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino.

**9.** Colorants réactifs selon la revendication 5, de formule

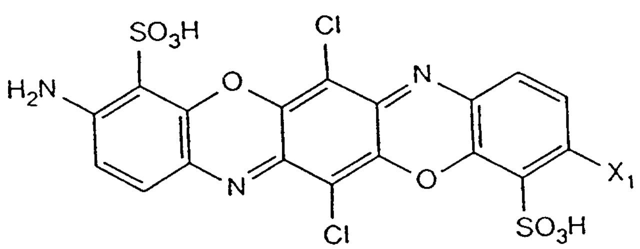

(6a)

ou

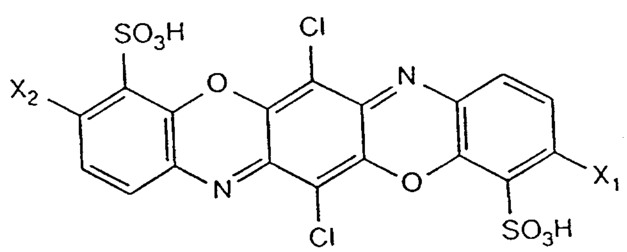

(9),

formules dans lesquelles $X_1$ ou $X_1$ et $X_2$ représentent chacun un radical de formule

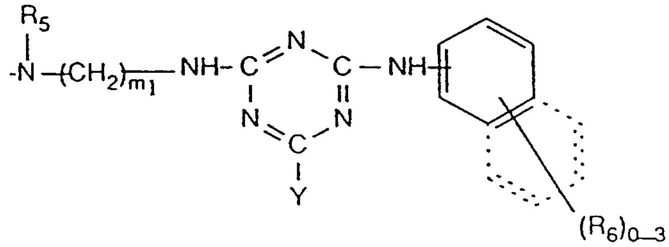

(3aa)

dans laquelle $m_1$ = 2, 3, 4, 5 ou 6 et $R_5$ est un atome d'hydrogène ou le groupe méthyle, éthyle ou hydroxyéthyle, $R_6$ est un atome de chlore ou le groupe méthyle, éthyle, méthoxy, éthoxy, carboxy ou sulfo, et Y est un radical

$$-NH-(CH_2)_{m_2}-SO_2-Z$$

$$-NH-(CH_2)_2-O-(CH_2)_2-SO_2-Z \quad \text{ou}$$

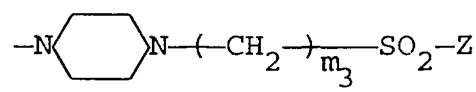

formules dans lesquelles $m_2$ et $m_3$ = 2, 3, 4, 5 ou 6, en particulier 2 ou 3, et Z est le groupe vinyle, $\beta$-chloréthyle ou $\beta$-sulfatoéthyle.

**10.** Colorants réactifs selon la revendication 9, dans lesquels $X_1$ ou $X_1$ et $X_2$ représentent chacun un radical de formule

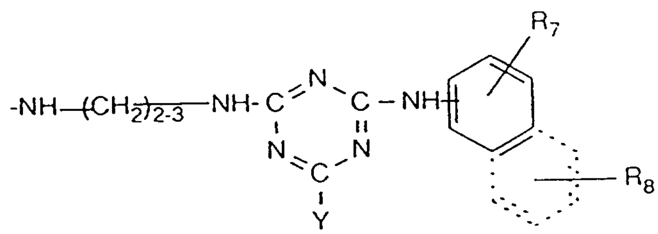

(3ab)

dans laquelle $R_7$ et $R_8$ représentent le groupe sulfo, ou $R_7$ est un atome d'hydrogène et $R_8$ est le groupe sulfo, ou $R_7$ est le groupe sulfo et $R_8$ est un atome d'hydrogène, et Y est un radical

$$-NH-(CH_2)_{2-3}-SO_2-Z$$

$$-NH-(CH_2)_2-O-(CH_2)_2-SO_2-Z \quad \text{ou}$$

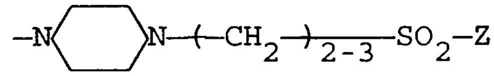

et Z a la signification donnée dans la revendication 9.

**11.** Procédé pour la préparation des colorants réactifs selon la revendication 1, caractérisé en ce que l'on condense un dérivé de type dioxazine de formule

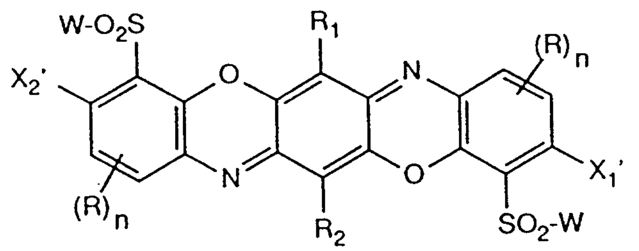

(16),

dans laquelle R, $R_1$, $R_2$, W et n ont les significations indiquées à propos de la formule (1), et $X_1$' est un radical de formule

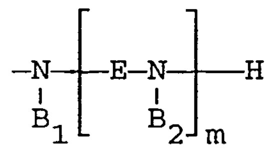

(17)

dans laquelle $B_1$, $B_2$, E et m ont les significations données à propos de la formule (2), $X_2$' est $-NH_2$ ou un radical de formule (17), avec un composé de formule

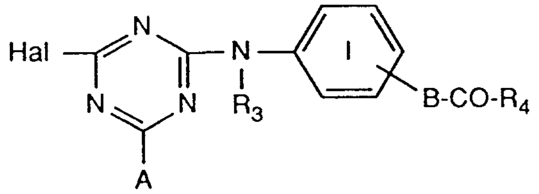

(21),

dans laquelle Hal est un atome d'halogène, et A, $R_3$, $R_4$ et I ont les significations données à propos de la formule (2), ou avec un composé de formule

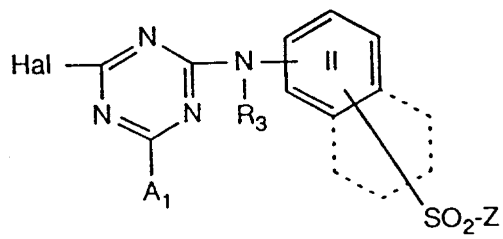

(22),

dans laquelle Hal est un atome d'halogène et $A_1$, $R_3$, Z et II ont les significations données à propos de la formule (3) ou avec un composé de formule

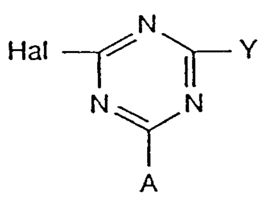

(23),

dans laquelle Hal est un atome d'halogène et A et Y ont les significations données à propos de la formule (3a).

**12.** Procédé pour la préparation des colorants réactifs selon la revendication 1, caractérisé en ce que l'on fait réagir 1 équivalent d'une 2,4,6-trihalogénotriazine s avec 1 équivalent d'une amine de formule

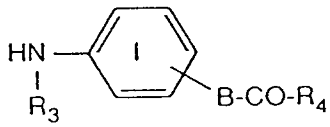

(18),

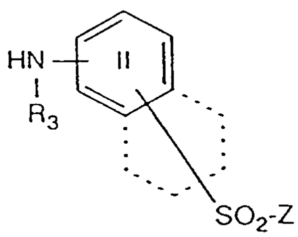

(19) ou

H-Y (20)

et avec 1 équivalent d'une amine de formule H-A ou H-$A_1$ et avec 1 équivalent d'une amine de formule

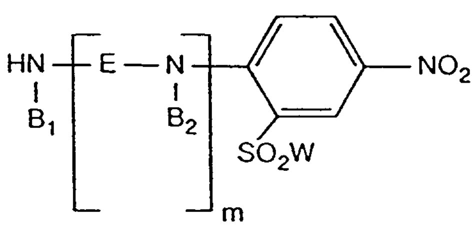

(25)

en un ordre quelconque, on réduit en l'amine le composé nitré obtenu, on fait réagir celle-ci avec $\frac{1}{2}$ équivalent de chloranile, et on effectue la cyclisation pour aboutir au composé de type dioxazine de formule (1);

A, $A_1$, B, $B_1$, $B_2$, E, m, $R_3$, $R_4$, W, Y, Z, I et II ayant les significations données à propos des formules (2), (3) et (3a).

**13.** Utilisation des colorants réactifs selon la revendication 1, pour la teinture et l'impression de matériaux fibreux contenant de la cellulose.

**14.** Utilisation selon la revendication 13, pour la teinture et l'impression du coton.

**Revendications pour l'Etat contractant suivant : ES**

**1.** Procédé pour la préparation de clorants réactifs de formule

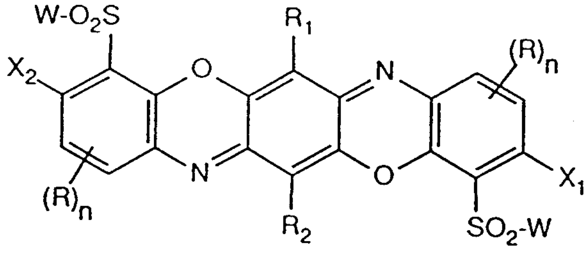

(1),

dans laquelle $R_1$ et $R_2$ représentent un atome d'hydrogène, de chlore ou de brome, ou un groupe alkyle en $C_1$-$C_4$, alcoxy en $C_1$-$C_4$ ou un groupe phényle éventuellement substitué, ou un groupe phénoxy éventuellement substitué,

$(R)_n$ représente n substituants R qui peuvent être, indépendamment les uns des autres, un atome d'halogène ou un groupe alkyle en $C_1$-$C_4$, alcoxy en $C_1$-$C_4$, sulfo, carboxy, carbamoyle, N-alkyl($C_1$-$C_4$)-carbamoyle, N,N-dialkyl($C_1$-$C_4$)-carbamoyle, alkyl($C_1$-$C_4$)sulfonyle, sulfamoyle, N-alkyl($C_1$-$C_4$)-sulfamoyle ou N,N-dialkyl($C_1$-$C_4$)sulfamoyle;

W représente le groupe hydroxy ou un groupe alkyle en $C_1$-$C_6$ qui peut être substitué par l'atome de chlore ou par des radicaux hydroxy, carboxy, sulfo, sulfato, alcoxy en carbamoyle, sulfamoyle ou par un radical

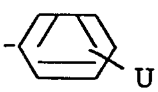 ou 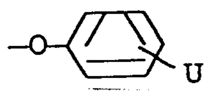

dans lequel U est le groupe sulfo, sulfato, hydroxy ou carboxy;

n = 0, 1 ou 2;

$X_1$ est un radical de formule

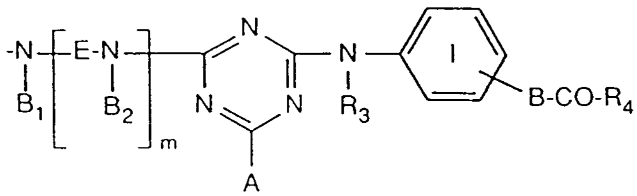 (2),

dans laquelle $B_1$ et $B_2$ représentent, indépendamment l'un de l'autre, un atome d'hydrogène ou un radical alkyle en $C_1$-$C_4$ éventuellement substitué;

E est un radical alkylène en $C_2$-$C_4$ qui peut être substitué par des substituants halogène, hydroxy, carboxy, sulfo, phényle, sulfophényle ou alcoxy($C_1$-$C_4$)carbonyle, ou un radical cyclohexylène qui peut être substitué par un groupe alkyle en $C_1$-$C_4$;

ou dans laquelle le groupe -N($B_1$)-E-N($B_2$)- est le groupe 1,4-pipérazinediyle;

m = 0 ou 1;

A représente le reste d'une amine;

$R_3$ représente un atome d'hydrogène ou un groupe alkyle en $C_1$-$C_4$ éventuellement substitué;

B représente la liaison directe ou un radical

$$-(CH_2)_{n'}- \quad \text{ou} \quad -O-(CH_2)_{n'}-;$$

n' = 1, 2, 3, 4, 5 ou 6;

$R_4$ représente un radical de formule

$$-\underset{V}{N}-(alk)-CH_2-SO_2-Z$$ (2a)

$$-\underset{R'}{N}-(\overset{T}{alk})-CH_2-SO_2-Z$$ (2b)

$$-\underset{R'}{N}-(CH_2)_p-O-(CH_2)_q-SO_2-Z$$ (2c)

$$-\underset{R'}{N}-(alk')-NH-(alk')-SO_2-Z$$ (2d)

$$-\underset{R'}{N}-(CH_2)_r-N[(CH_2)_s-SO_2-Z]_2$$ (2e) ou

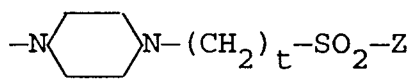

(2f),

formules dans lesquelles R' est un atome d'hydrogène ou un groupe alkyle en $C_1$-$C_6$, alk représente un radical alkylène ayant de 1 à 7 atomes de carbone, t représente un atome d'hydrogène ou d'halogène ou un groupe hydroxy, sulfato, carboxy, cyano, alcanoyloxy en $C_1$-$C_4$, alcoxy($C_1$-$C_4$)carbonyle, carbamoyle ou un radical $-SO_2$-Z, V représente un atome d'hydrogène ou un groupe alkyle en $C_1$-$C_4$ éventuellement substitué ou un radical de formule

$$-(\overset{T}{alk})-CH_2-SO_2-Z$$ (2g)

dans laquelle (alk) a la signification donnée précédemment; les radicaux alk', indépendamment l'un de l'autre, représentent des radicaux polyméthylène ayant de 2 à 6 atomes de carbone;
Z représente un groupe $\beta$-sulfatoéthyle, $\beta$-thiosulfatoéthyle, $\beta$-phosphatoéthyle, $\beta$-acyloxyéthyle, $\beta$-halogénoéthyle ou vinyle;
p, q, r et t représentent chacun, indépendamment les uns des autres, le nombre 1, 2, 3, 4, 5 ou 6;
s est le nombre 2, 3, 4, 5 ou 6, et
$X_2$ est le groupe $-NH_2$;
ou dans laquelle $X_1$ représente un radical de formule

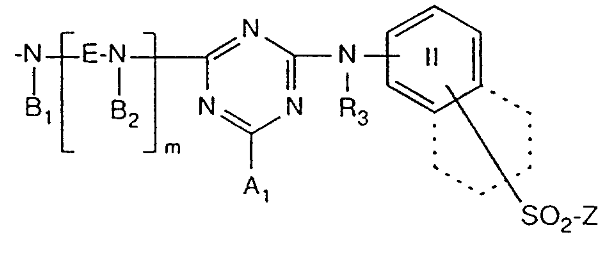

(3),

dans laquelle $A_1$ représente l'un des radicaux de formules (2a) à (2f), ou un radical de formule

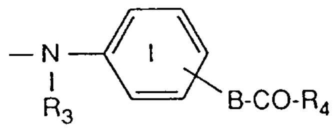

(4)

ou

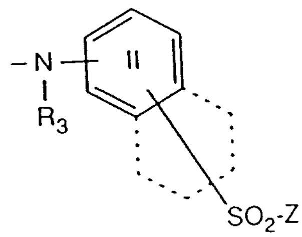

(5)

et $B_1$, $B_2$, E, m, $R_3$, $R_4$ et Z ont les significations indiquées, et le cycle benzénique I et le cycle benzénique ou naphtalénique II peuvent comporter d'autres substituants, et $X_2$ est le groupe $-NH_2$; ou dans laquelle $X_1$ est un radical de formule (2) et $X_2$, indépendamment de $X_1$ est également un radical de formule (2); ou dans laquelle $X_1$ est un radical de formule

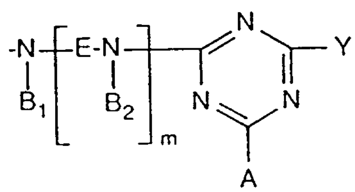

(3a),

dans laquelle Y représente l'un des radicaux de formule (2a) à (2f), $B_1$, $B_2$, E, A et m ont les significations indiquées, et $X_2$ est le groupe $-NH_2$ ou également un radical de formule (3a), étant entendu que le radical A dans les formules (2) et (3a) est exempt de groupes réactifs avec les fibres, caractérisé en ce que l'on condense un dérivé de type dioxazine de formule

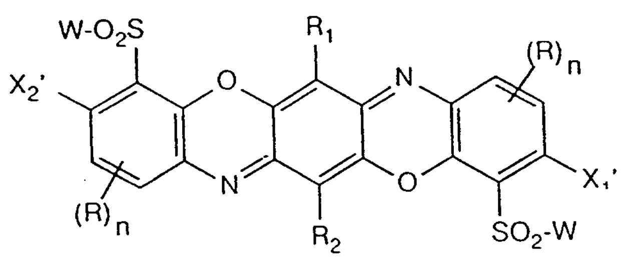

(16),

dans laquelle R, $R_1$, $R_2$, W et n ont les significations indiquées à propos de la formule (1), et $X_1$' est un radical de formule

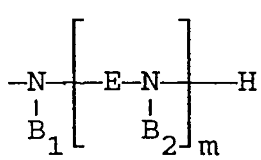

(17)

dans laquelle $B_1$, $B_2$, E et m ont les significations données à propos de la formule (2), $X_2$' est $-NH_2$ ou un radical de formule (17), avec un composé de formule

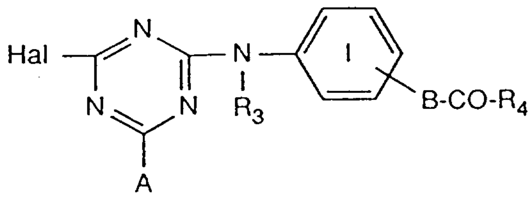

(21),

dans laquelle Hal est un atome d'halogène, et A, $R_3$, $R_4$ et I ont les significations données à propos de la formule (2), ou avec un composé de formule

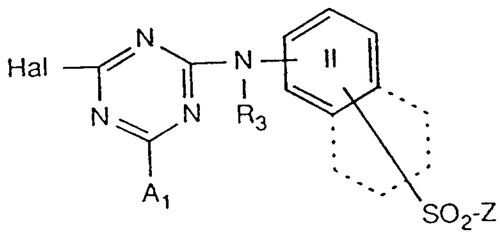

(22),

dans laquelle Hal est un atome d'halogène et $A_1$, $R_3$, Z et II ont les significations données à propos de la formule (3) ou avec un composé de formule

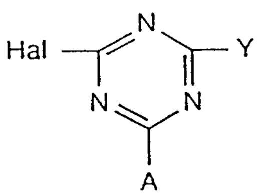

(23),

dans laquelle Hal est un atome d'halogène et A et Y ont les significations données à propos de la formule (3a).

2. Procédé selon la revendication 1, caractérisé en ce que l'on prépare un composé de type dioxazine de formule (1) dans lequel $X_1$ est un radical de formule (2) ou (3), et $A_1$ est un radical de formule

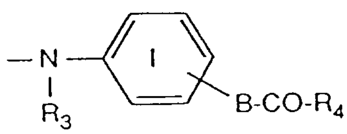

(4)

ou

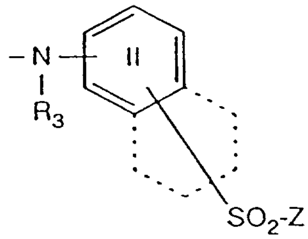

(5)

formules dans lesquelles $R_3$, B, $R_4$ et Z ont les significations indiquées dans la revendication 1, les

radicaux de formules (4) et (5) étant indépendants des radicaux analogues dans les formules (2) et (3), et le cycle benzénique I et le cycle benzénique ou naphtalénique II pouvant comporter d'autres substituants, et $X_2$ est le groupe $NH_2$.

**3.** Procédé selon la revendication 1, caractérisé en ce que l'on prépare un composé de type dioxazine dans lequel $X_1$ est un radical de formule (2), A est le groupe $-NH_2$, un radical alkyl($C_1$-$C_4$)amino qui peut être substitué par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut être substitué par des substituants halogène, alkyle en $C_1$-$C_4$, alcoxy en $C_1$-$C_4$, hydroxy, uréido, acétylamino, carboxy, sulfo ou sulfométhyle, un radical N-alkyl($C_1$-$C_4$)-N-phényl-amino qui peut être substitué sur le fragment alkyle par des substituants halogène, cyano, hydroxy, carboxy, sulfo ou sulfato et sur le fragment phényle par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino, et $X_2$ le groupe $-NH_2$.

**4.** Procédé selon la revendication 1, caractérisé en ce que l'on prépare un composé de type dioxazine de formule (1) dans lequel $X_1$ et et $X_2$ représentent chacun, indépendamment l'un de l'autre, un radical de formule (2), et A est le groupe $-NH_2$, un radical alkyl($C_1$-$C_4$)amino qui peut être substitué par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut être substitué par des substituants alkyle en $C_1$-$C_4$,alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par des substituants halogène, cyano, hydroxy, carboxy, sulfo ou sulfato et sur le fragment phényle par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino.

**5.** Procédé selon l'une des revendications 1 à 4, caractérisé en ce que l'on prépare un composé de type dioxazine de formule (1) dans lequel $X_1$ est un radical de formule (3a), $B_1$, $B_2$, E et Y ont les significations données à propos de la formule (3) et A est le groupe $-NH_2$, un radical alkyl($C_1$-$C_4$)amino qui peut être substitué par un groupe alcoxy en $C_1$-$C_4$, hydroxy, sulfo ou sulfato, un radical N,N-dialkyl-($C_1$-$C_4$)amino qui peut être substitué par le groupe hydroxy, un radical phénylamino qui peut être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par des substituants halogène, cyano, hydroxy, carboxy, sulfo ou sulfato ou sur le fragment phényle par des substituants alkyle en $C_1$-$C_4$,alcoxy en $C_1$-$C_4$, halogène, hydroxy, uréido, acétylamino, carboxy, sulfo ou sulfométhyle, un radical naphtylamino, le noyau naphtalène pouvant être substitué comme indiqué pour le cycle phényle, ou le radical morpholino, et $X_2$ est le groupe $-NH_2$, ou dans lesquels $X_1$ et $X_2$ représentent chacun, indépendamment l'un de l'autre, un radical de formule (2), et A est le groupe $-NH_2$, un radical alkyl($C_1$-$C_4$)amino qui peut être substitué par un groupe alcoxy en $C_1$-$C_4$, hydroxy, sulfo ou sulfato, un radical N,N-dialkyl($C_1$-$C_4$)amino qui peut être substitué par le groupe hydroxy, un radical phénylamino qui peut être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par un atome d'halogène ou par le groupe cyano, hydroxy, carboxy, sulfo ou sulfato et, sur le fragment phényle, par des substituants alkyle en $C_1$-$C_4$, alcoxy en $C_1$-$C_4$, halogène, hydroxy, uréido, acétylamino, carboxy, sulfo ou sulfométhyle, un radical naphtylamino, le noyau naphtalénique pouvant être substitué comme indiqué pour le cycle phényle, ou le radical morpholino.

**6.** Procédé selon l'une des revendications 1 à 5, caractérisé en ce que l'on prépare un composé de type dioxazine de formule

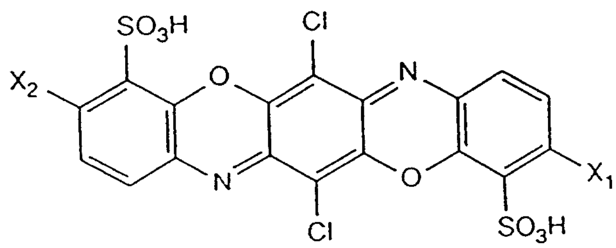

(6),

dans laquelle $X_1$ et $X_2$ ont les significations données dans l'une des revendications 1 à 5.

**7.** Procédé selon l'une des revendications 1, 2 et 3, caractérisé en ce que l'on prépare un composé de type dioxazine de formule

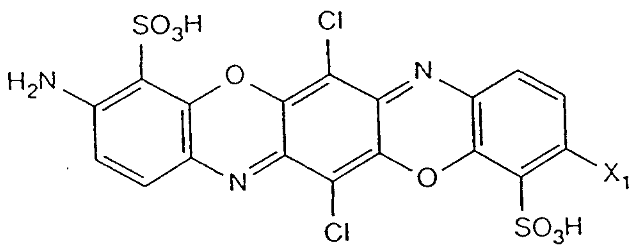

(6a),

dans laquelle $X_1$ représente un radical de formule

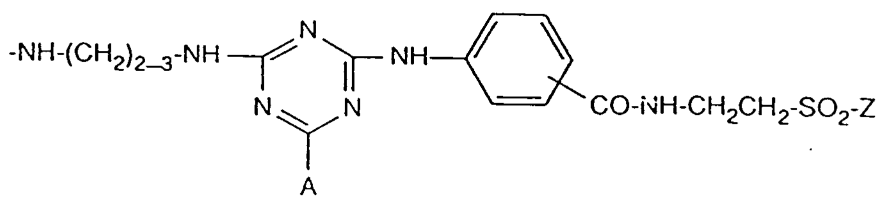

(7),

A est le groupe $-NH_2$, un radical alkyl($C_1$-$C_4$)amino qui peut être substitué par des substituants alcoxy en $C_1$-$C_4$, hydroxy, sulfato ou sulfo, un radical N,N-dialkyl($C_1$-$C_4$)amino qui peut être substitué par le groupe hydroxy, un radical phénylamino qui peut être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par un atome d'halogène ou par le groupe cyano, hydroxy, carboxy, sulfo ou sulfato et, sur le fragment phényle, par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino.

**8.** Procédé selon l'une des revendications 1 et 4, caractérisé en ce que l'on prépare un composé de type dioxazine de formule

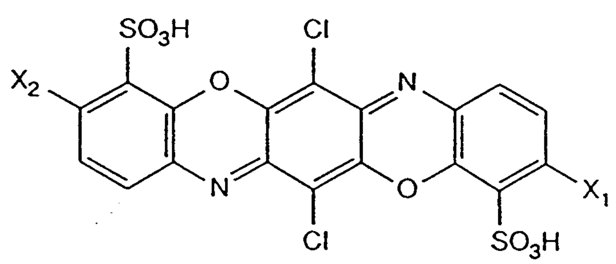

(9),

dans laquelle $X_1$ et $X_2$ représentent chacun un radical de formule

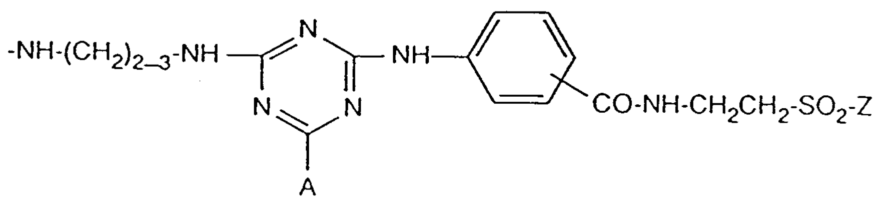

(7),

A représente le groupe $-NH_2$, un radical alkyl($C_1$-$C_4$)amino qui peut être substitué par des substituants alcoxy en $C_1$-$C_4$, hydroxy, sulfato ou sulfo, un radical N,N-dialkyl($C_1$-$C_4$)amino qui peut être substitué par le groupe hydroxy, un radical phénylamino qui peut être substitué par des substituants alkyle en $C_1$-$C_4$, alcoxy en $C_1$-$C_4$, halogène, hydroxy, uréido, acétylamino, carboxy, sulfo ou sulfométhyle, un radical N-alkyl($C_1$-$C_4$)-N-phénylamino qui peut être substitué sur le fragment alkyle par des atomes d'halogène ou par le groupe cyano, hydroxy, carboxy, sulfo ou sulfato et, sur le fragment phényle par des substituants alkyle en $C_1$-$C_4$, alcoxy en $C_1$-$C_4$, halogène, hydroxy, uréido, acétylamino, carboxy, sulfo ou sulfométhyle, le radical sulfonaphtylamino ou morpholino.

**9.** Procédé selon la revendication 5, caractérisé en ce que l'on prépare un composé de type dioxazine de formule

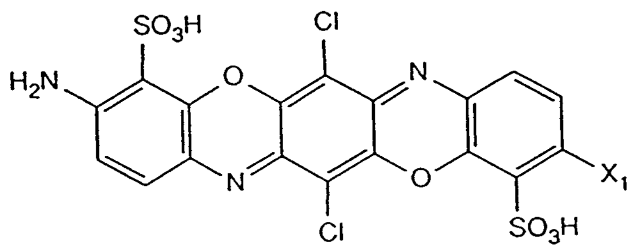

(6a) ou

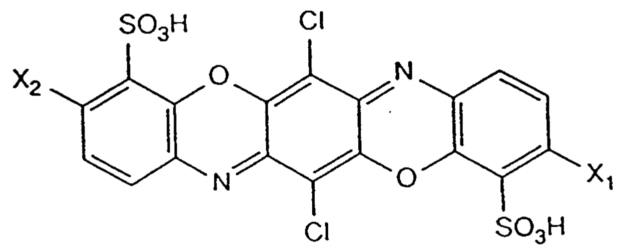

(9),

formules dans lesquelles $X_1$ ou $X_1$ et $X_2$ représentent chacun un radical de formule

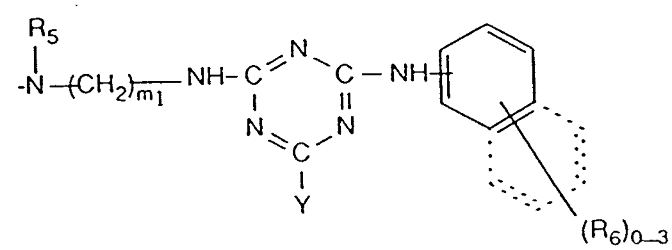

(3aa)

dans laquelle $m_1$ = 2, 3, 4, 5 ou 6 et $R_5$ est un atome d'hydrogène ou le groupe méthyle, éthyle ou hydroxyéthyle, $R_6$ est un atome de chlore ou le groupe méthyle, éthyle, méthoxy, éthoxy, carboxy ou sulfo, et Y est un radical

$$-NH-(CH_2)_{m_2}-SO_2-Z$$

$$-NH-(CH_2)_2-O-(CH_2)_2-SO_2-Z \quad \text{ou}$$

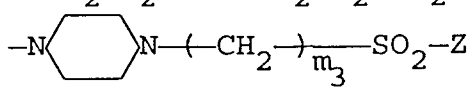

formules dans lesquelles $m_2$ et $m_3$ = 2, 3, 4, 5 ou 6, en particulier 2 ou 3, et Z est le groupe vinyle, $\beta$-chloréthyle ou $\beta$-sulfatoéthyle.

**10.** Procédé selon la revendication 9, caractérisé en ce que l'on prépare un composé de type dioxazine de formule (1) dans lequel $X_1$ ou $X_1$ et $X_2$ représentent chacun un radical de formule

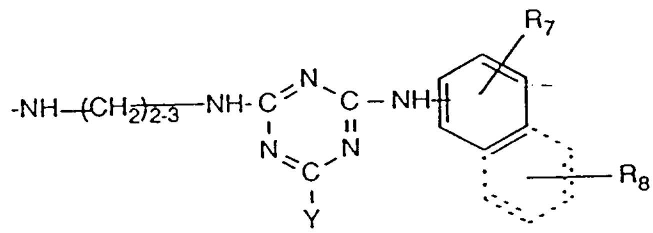

(3ab)

dans laquelle $R_7$ et $R_8$ représentent le groupe sulfo, ou $R_7$ est un atome d'hydrogène et $R_8$ est le groupe sulfo, ou $R_7$ est le groupe sulfo et $R_8$ est un atome d'hydrogène, et Y est un radical

$$-NH-(CH_2)_{2-3}-SO_2-Z$$

$$-NH-(CH_2)_2-O-(CH_2)_2-SO_2-Z \quad \text{ou}$$

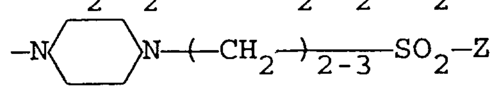

et Z a la signification donnée dans la revendication 9.

**11.** Procédé pour la préparation des colorants réactifs selon la revendication 1, caractérisé en ce que l'on fait réagir 1 équivalent d'une 2,4,6-trihalogénotriazine s avec 1 équivalent d'une amine de formule

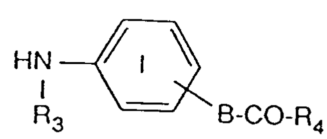

(18),

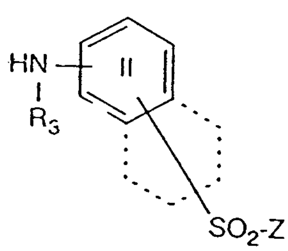

(19) ou

H-Y (20)

et avec 1 équivalent d'une amine de formule H-A ou H-$A_1$ et avec 1 équivalent d'une amine de formule

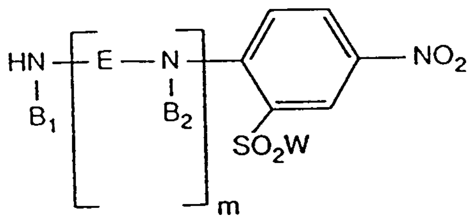

(25)

en un ordre quelconque, on réduit en l'amine le compose nitré obtenu, on fait réagir celle-ci avec $\frac{1}{2}$ équivalent de chloranile, et on effectue la cyclisation pour aboutir au composé de type dioxazine de formule (1); A, $A_1$, B, $B_1$, $B_2$, E, m, $R_3$, $R_4$, W, Y, Z, I et II ayant les significations données à propos des formules (2), (3) et (3a).

**12.** Utilisation des colorants réactifs selon la revendication 1, pour la teinture et l'impression de matériaux fibreux contenant de la cellulose.

**13.** Utilisation selon la revendication 12, pour la teinture et l'impression du coton.